# EUROPEAN PATENT APPLICATION

(11) **EP 3 070 665 A1**
(43) Date of publication of application: **21.09.2016**
(21) Application number: 14861330.0
(22) Date of filing: 31.10.2014
(51) Int. Cl.: G06Q 50/10, G06Q 30/02, H04M 3/487, H04M 11/00

(54) **INFORMATION PROCESSING SYSTEM, POPULATION FLOW ESTIMATION DEVICE, PROGRAM, INFORMATION PROCESSING METHOD, AND POPULATION FLOW ESTIMATION METHOD**

(30) Priority: 13.11.2013 JP 2013235469
(71) Applicant: Agoop Corp., Tokyo 105-0021 (JP)
(72) Inventor: YAMADA, Yutaka, Tokyo 105-0021 (JP); SHIBAYAMA, Kazuhisa, Tokyo 105-0021 (JP); SOGA, Yuji, Tokyo 105-0021 (JP); WATAMORI, Hirofusa, Tokyo 105-0021 (JP)
(74) Representative: Michalski Hüttermann & Partner Patentanwälte mbB
(86) International application number: PCT/JP2014/079119
(87) International publication number: WO 2015/072357

(57) **Abstract**

In conventional techniques, obtained information is not utilized sufficiently. A system comprises: a movement history acquiring unit that acquires one or more pieces of movement history information in which terminal identification information identifying each of one or more communication terminals, terminal positional information indicating a position at which a communication terminal is present, and acquisition clock time information indicating a clock time at which the terminal positional information has been acquired are associated; and a presence probability generating unit that generates, based on the one or more pieces of movement history information, each of one or more pieces of presence probability information about a probability that a communication terminal present in a first area from among one or more areas having predetermined geographical ranges is present in a second area from among the one or more areas after each of one or more predetermined periods of time has elapsed.

## Description

### BACKGROUND

### 1. TECHNICAL FIELD

The present invention relates to an information processing system, a population flow rate estimation apparatus, a program, an information processing method and a method of estimating a population flow rate.

### 2. RELATED ART

It is known to identify a floating population by utilizing communication terminals (for example, see Patent Documents 1 to 6).

### (Prior Art Documents)

(Patent Document 1) Japanese Patent Application Publication No. 2013-97471
(Patent Document 2) Japanese Patent Application Publication No. 2005-202546
(Patent Document 3) Japanese Patent Application Publication No. 2010-200283
(Patent Document 4) WO 2010/113706
(Patent Document 5) WO 2010/116916
(Patent Document 6) WO 2011/021606

However, information obtained is not sufficiently utilized in the conventional techniques.

### SUMMARY

Therefore, it is an object of an aspect of the innovations herein to provide an information processing system, a population flow rate estimation apparatus, a program, a recording medium, an information processing method and a method of estimating a population flow rate, which are capable of overcoming the above drawbacks accompanying the related art.
The above and other objects can be achieved by combinations described in the claims.

A first aspect of the present invention includes an information processing system.
The above-mentioned information processing system comprises: a movement history acquiring unit that acquires one or more pieces of movement history information in which terminal identification information identifying each of one or more communication terminals, terminal positional information indicating a position of a communication terminal identified by the terminal identification information, and acquisition clock time information indicating a clock time at which the terminal positional information has been acquired are associated with each other.
The above-mentioned information processing system comprises: a presence probability generating unit that generates, based on the one or more pieces of movement history information, each of one or more pieces of presence probability information about a probability that a communication terminal present in a first area from among one or more areas having predetermined geographical ranges is present in a second area from among the one or more areas after each of one or more predetermined periods of time has elapsed.

In the above-mentioned information processing system, the presence probability generating unit may generate the one or more pieces of presence probability information about at least one of one or more categories about time.
Each of the one or more movement histories may include information about an external environment of a communication terminal at a clock time at which the terminal positional information has been acquired.
In the above-mentioned information processing system, the presence probability generating unit may generate the one or more pieces of presence probability information about at least one of one or more categories about the external environment.
In the above-mentioned information processing system, each of the one or more movement histories may include information about an attribute of a user of a communication terminal identified by the terminal identification information.
The presence probability generating unit may generate each of the one or more pieces of presence probability information for each of one or more categories about attribute of a user of the one or more communication terminals

The above-mentioned information processing system may further comprise a distribution unit that distributes, based on at least one of the one or more pieces of presence probability information, advertisement information to at least one communication terminal present in the first area.
The above-mentioned information processing system may further comprise an advertisement information selecting unit that selects, based on at least one of the one or more pieces of presence probability information, advertisement information that should be distributed to at least one communication terminal present in the first area.
In the above-mentioned information processing system, the advertisement information selecting unit may select the advertisement information based on at least one of the one or more pieces of presence probability information and on at least one of a time at which the advertisement information is distributed, a climate at a time at which the advertisement information is distributed, and an attribute of a user of a communication terminal to which the advertisement information is distributed.

The above-mentioned information processing system may further comprise a distribution-destination terminal selecting unit that selects, based on at least one of the one or more pieces of presence probability information, at least either of: a communication terminal, from among the one or more communication terminals, to which a particular piece of advertisement information should be distributed; and an area to which the particular piece of advertisement information should be distributed.
In the above-mentioned information processing system, the distribution-destination terminal selecting unit may select at least either of: a communication terminal to which the particular piece of advertisement information should be distributed; and an area to which the particular piece of advertisement information should be distributed, based on at least one of the one or more pieces of presence probability information and on at least one of a time at which the advertisement information is distributed, a climate at a time at which the advertisement information is distributed, and an attribute of a user of a communication terminal to which the advertisement information is distributed.

The above-mentioned information processing system may further comprise an outlier detecting unit that detects an outlier out of the one or more pieces of movement history information.
In the above-mentioned information processing system, the presence probability generating unit may decide each of the one or more pieces of presence probability information, excluding movement history information detected as the outlier by the outlier detecting unit from among the one or more pieces of movement history information.
The above-mentioned information processing system may further comprise a variation amount deciding unit that decides, based on the one or more pieces of movement history information, a variation amount, in a predetermined period of time, of the number of communication terminals, from among the one or more communication terminals, that are present in each area of the one or more areas.

A second aspect of the present invention includes an information processing system.
The above-mentioned information processing system comprises: a movement history acquiring unit that acquires one or more pieces of movement history information in which terminal identification information identifying each of one or more communication terminals, terminal positional information indicating a position of a communication terminal identified by the terminal identification information, and acquisition clock time information indicating a clock time at which the terminal positional information has been acquired are associated with each other.
The above-mentioned information processing system comprises: a map information generating unit that analyzes the one or more pieces of movement history information to generate map information

A third aspect of the present invention includes a population flow rate estimation apparatus.
The above-mentioned population flow rate estimation apparatus comprises: a movement history acquiring unit that acquires one or more pieces of movement history information in which terminal identification information identifying each of one or more communication terminals, terminal positional information indicating a position where the communication terminal has been present, and acquisition clock time information indicating a clock time at which the terminal positional information has been acquired are associated with each other.
The above-mentioned population flow rate estimation apparatus comprises: an outlier detecting unit that detects an outlier out of the one or more pieces of movement history information; and a variation amount deciding unit that decides, based on the one or more pieces of movement history information, a variation amount, in a predetermined period of time, of the number of communication terminals, from among the one or more communication terminals, that are present in at least one area from among one or more areas having predetermined geographical ranges.
In the above-mentioned population flow rate estimation apparatus, the variation amount deciding unit decides the variation amount in a predetermined period of time, excluding movement history information detected as the outlier by the outlier detecting unit from among the one or more pieces of movement history information.

The above-mentioned population flow rate estimation apparatus may further comprise an area-based user count deciding unit that decides the number of area-based users indicating the number of communication terminals, from among the one or more communication terminals, of users having activity bases in each area of one or more areas having predetermined geographical ranges.
The population flow rate estimation apparatus may further comprise a population flow rate estimating unit that estimates a population flow rate based on the variation amount in a predetermined period of time.

A fourth aspect of the present invention includes a program that causes a computer to function as the above-mentioned information processing system.
A computer-readable recording medium having stored thereon a program that causes a computer to function as the above-mentioned information processing system may be provided.

A fifth aspect of the present invention includes a program that causes a computer to function as the above-mentioned population flow rate estimation apparatus. A computer-readable recording medium having stored thereon a program that causes a computer to function as the above-mentioned population flow rate estimation apparatus may be provided.

A sixth aspect of the present invention includes an information processing method.
The above-mentioned information processing method comprises: acquiring one or more pieces of movement history information in which terminal identification information identifying each of one or more communication terminals, terminal positional information indicating a position where the communication terminal is present, and acquisition clock time information indicating a clock time at which the terminal positional information has been acquired are associated with each other.
The above-mentioned information processing method comprises: generating, based on the one or more pieces of movement history information, each of one or more pieces of presence probability information about a probability that a communication terminal present in a first area from among one or more areas having predetermined geographical ranges is present in a second area from among the one or more areas after each of one or more predetermined periods of time has elapsed.

A seventh aspect of the present invention includes a method of estimating a population flow rate.
The above-mentioned method of estimating a population flow rate comprises: acquiring one or more pieces of movement history information in which terminal identification information identifying each of one or more communication terminals, terminal positional information indicating a position where the communication terminal has been present, and acquisition clock time information indicating a clock time at which the terminal positional information has been acquired are associated with each other The above-mentioned method comprises: detecting an outlier out of the one or more pieces of movement history information; and deciding, based on the one or more pieces of movement history information, a variation amount, in a predetermined period of time, of the number of communication terminals, from among the one or more communication terminals, that are present in at least one area from among one or more areas having predetermined geographical ranges
In the above-mentioned method, the deciding has deciding the variation amount in a predetermined period of time, excluding movement history information detected as the outlier by the detecting from among the one or more pieces of movement history information.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows one example of a communication status analyzing system 100.
Fig. 2 schematically shows one example of a communication terminal 110.
Fig. 3 schematically shows one example of a log information data table 300.
Fig. 4 schematically shows one example of an operation of the communication terminal 110.
Fig. 5 schematically shows another example of an operation of the communication terminal 110.
Fig. 6 schematically shows one example of a communication terminal 610.
Fig. 7 schematically shows one example of an operation of the communication terminal 610
Fig. 8 schematically shows one example of a communication terminal 810.
Fig. 9 schematically shows one example of an attribute analyzing unit 832.
Fig. 10 schematically shows one example of information processing in an attribute deciding unit 916.
Fig. 11 schematically shows one example of an information distributing system 1100.
Fig. 12 schematically shows one example of an information distributing server 1120.
Fig. 13 schematically shows one example of a presence probability information data table 1300.
Fig. 14 schematically shows one example of a presence probability information data table 1400.
Fig. 15 schematically shows one example of a presence probability information data table 1500.
Fig. 16 schematically shows one example of an information collecting server 120.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention. The same or similar parts in the drawings are provided with the same reference numbers, and redundant explanation may be omitted in some cases.

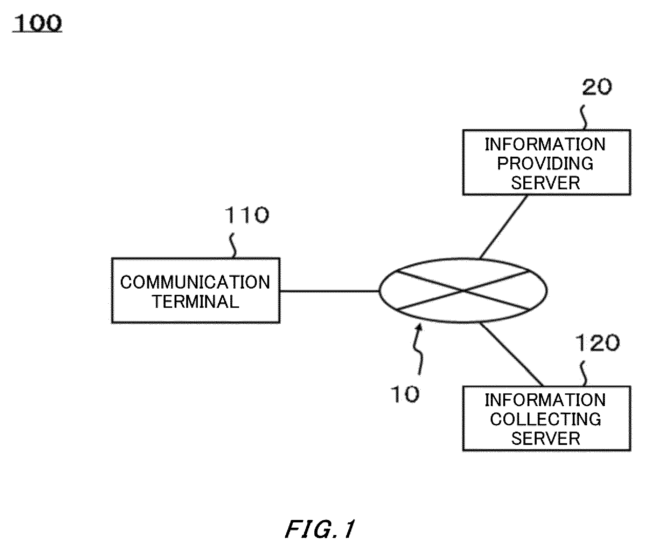

Fig. 1 schematically shows one example of a communication status analyzing system 100. In the present embodiment, the communication status analyzing system 100 comprises a communication terminal 110 and an information collecting server 120. The communication status analyzing system 100 and the communication terminal 110 may be one example of an information processing apparatus. The communication terminal 110 may be one example of a computer having a communication function.

The communication terminal 110 and the information collecting server 120 transmit and receive information via a communication network 10. The communication terminal 110 and an information providing server 20 transmit and receive information via the communication network 10. The communication network 10 may be a wireless communication transmission line, or may be a combination of a wireless communication transmission line and a wired communication transmission line. The communication network 10 may be a mobile communication network such as a cellular phone network, a wireless packet communication network, the Internet or a dedicated line, or a combination of these.

Each of the information providing server 20 and the information collecting server 120 may be realized by activating software or a program defining an operation of each unit of each of the information providing server 20 and the information collecting server 120 in a generally configured information processing apparatus. The information processing apparatus used as the information providing server 20 and the information collecting server 120 may comprise: a data processing apparatus having a processor such as a CPU, a ROM, a RAM, a communication interface and the like; an input apparatus such as a keyboard, a touch panel or a microphone; an output apparatus such as a display apparatus or a speaker; and a memory apparatus such as a memory or a HDD. The data processing apparatus or the memory apparatus may memorize the above-mentioned software or program. The information providing server 20 and the information collecting server 120 may be one example of an information processing apparatus comprising a processor and a memory apparatus memorizing a command or program to be executed by the processor. By being executed by the processor, the above-mentioned command or program allows the information processing apparatus to execute an operation defined by the command or program.

Each of the information providing server 20 and the information collecting server 120 may be a virtual server or a cloud system. Also, functions of each of the information providing server 20 and the information collecting server 120 may be realized by a plurality of servers.

The information providing server 20 provides a service to a user of the communication terminal 110 by providing information to the communication terminal 110 via the communication network 10. Examples of a service provided by the information providing server 20 include an information search service, a navigation service on a map, a mailing service, a video/music data distribution service, an electronic book distribution service or the like.
The information providing server 20 receives, from the communication terminal 110, a transmission request about information designated by a user of the communication terminal 110. The information providing server 20 transmits information to the communication terminal 110 according to a transmission request from the communication terminal 110.

The communication terminal 110 has a communication function. The communication terminal 110 may have a wireless communication function. The communication terminal 110 may support a plurality of communication systems. For example, the communication terminal 110 supports both communication systems of a mobile communication system such as the 3G system, the LTE system or the 4G system, and a wireless communication system such as WiFi (registered trademark) or WiMAX (registered trademark). The communication terminal 110 may be any apparatus as long as it can transmit and receive information to and from the information providing server 20 and the information collecting server 120, and may be a personal computer, a cellular phone, a mobile terminal (examples of which include a PDA, tablet and notebook computers, and a laptop computer) or a wireless terminal on which Web browser software is installed.

The communication terminal 110 may be realized by activating software or a program defining an operation of each unit of the communication terminal 110 in a generally configured information processing apparatus. The information processing apparatus used as the communication terminal 110 may comprise: a data processing apparatus having a processor such as a CPU, a ROM, a RAM, a communication interface and the like; an input apparatus such as a keyboard, a touch panel, a microphone, a GPS information acquiring apparatus, an acceleration sensor or a gyro sensor; an output apparatus such as a display apparatus, a speaker or a vibration apparatus; and a memory apparatus such as a memory or a HDD. The data processing apparatus or the memory apparatus may memorize the above-mentioned software or program. The communication terminal 110 may be one example of an information processing apparatus having a communication function, and comprising a processor and a memory apparatus memorizing a command or program to be executed by the processor. By being executed by the processor, the above-mentioned command or program allows the information processing apparatus to execute an operation defined by the command or program.

The communication terminal 110 accepts a user instruction, and executes a process instructed by the user instruction. The user instruction may be an instruction to instruct the communication terminal 110 to execute a process other than a process for acquiring information about a communication environment. When having accepted a user instruction, the communication terminal 110 acquires information about a communication environment of the communication terminal 110 (referred to as communication environment information, in some cases), and positional information indicating a position at which the communication environment information was acquired. When the process instructed by the user instruction is executed, the communication terminal 110 may acquire the communication environment information and the positional information. The positional information may be information about latitude and longitude, and may further include information about altitude. The communication terminal 110 transmits, to the information collecting server 120, information in which at least the communication environment information and the positional information are associated (referred to as log information, in some cases).

Examples of communication environment information include information about: the possibility or impossibility of communication; the radio wave status (examples of which include radio wave reception level, radio wave intensity, RSCP (Received Signal Code Power), CID (Cell ID) or the like); the communication quality (examples of which include communication speed, throughput of data communication, latency of data communication or the like); the communication system; the communication carrier; or the like. The communication environment information may include information about a network other than information related to radio waves. Regarding the possibility or impossibility of communication, for example, communication is determined as not being possible (referred to as communication impossible, in some cases) when the radio wave reception level is lower than a predetermined level (for example, when outside the coverage).

The log information may be information in which the communication environment information, the positional information, and at least one of: information indicating a clock time at which the communication environment information was acquired, information indicating a GPS intensity at which the positional information was acquired; and information about the communication terminal 110 are associated. Examples of information about the communication terminal 110 include terminal identification information identifying each of the communication terminals 110, information indicating the model of the communication terminal 110, information indicating the OS of the communication terminal 110 or the like.

The information indicating a clock time at which the communication environment information was acquired may be a clock time at which the communication terminal 110 started a process of acquiring the communication environment information, may be a clock time at which the communication terminal 110 completed a process of acquiring the communication environment information, or may be a clock time at which the communication terminal 110 accepted a user instruction. The terminal identification information may be one example of identification information identifying a computer.

The terminal identification information is not particularly limited as long as it is information that allows identification of each of the communication terminals 110, but is preferably information that allows identification of the communication terminal 110 without identification of a user. Thereby, the information collecting server 120 can analyze the log information by considering temporal relevance of the log information without identification of a user.

For example, a randomly selected code string is added as terminal identification information of a particular communication terminal 110. The code string may be a code string unique to each of one or more communication terminals 110, or may be reutilized among a plurality of communication terminals 110
The terminal identification information may be updated every predetermined period of time, or may be updated at any timing.

The information collecting server 120 receives log information from each of one or more communication terminals 110. The information collecting server 120 may store the received log information in a memory apparatus. The information collecting server 120 may analyze the communication status by using the log information.

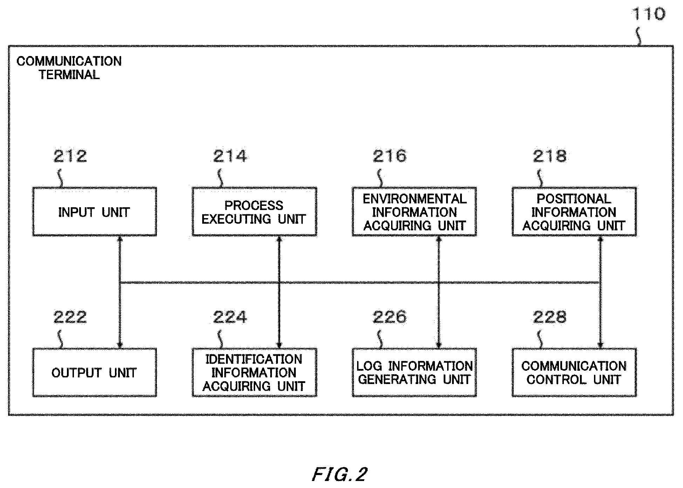

Fig. 2 schematically shows one example of the communication terminal 110. In explanation with reference to Fig. 2, explanation of parts that overlap with explanation in relation to Fig. 1 may be omitted in some cases. In the present embodiment, the communication terminal 110 comprises an input unit 212, a process executing unit 214, an environmental information acquiring unit 216, a positional information acquiring unit 218, an output unit 222, an identification information acquiring unit 224, a log information generating unit 226 and a communication control unit 228. Each unit of the communication terminal 110 transmits and receives information to and from each other.

Respective units of the communication terminal 110 may be realized by hardware, may be realized by software, or may be realized by a combination of hardware and software. Also, execution of programs may allow a computer to function as a part of the communication terminal 110. The programs may be memorized in a computer-readable medium such as a CD-ROM, a DVD-ROM, a memory and a hard disk, or may be memorized in a memory apparatus connected to a network. The programs may be installed on a computer of the communication terminal 110 from a computer-readable medium or a memory apparatus connected to a network.

The programs that cause the computer to function as a part of the communication terminal 110 may comprise modules defining an operation of each unit of the communication terminal 110. These programs or modules act on a processor, a communication interface, a GPS information acquiring apparatus or the like to allow the computer to function as each unit of the communication terminal 110 or allow the computer to execute an information processing method in the communication terminal 110.

Information processing described in these programs is read into the computer to function as specific means in which software and various types of hardware resources of the communication terminal 110 cooperate with each other. Then, by realizing, with these specific means, an arithmetic operation or processing on information according to the purpose of use of a computer in the present embodiment, the communication terminal 110 according to the purpose of use can be constructed.

The input unit 212 accepts a user instruction from a user. The input unit 212 may be a keyboard, a touch panel or a microphone. The user instruction instructs the communication terminal 110 to execute a process other than a process for acquiring information about a communication environment. Accordingly, user instructions do not include an instruction exclusively requesting to acquire information for measuring a line speed or a communication speed, an instruction exclusively requesting to access a server that provides a service of measuring a line speed or a communication speed, or the like. The input unit 212 may be one example of a user request accepting unit.

The process executing unit 214 executes a process instructed by the user instruction. The process instructed by the user instruction may be a process utilizing a communication function, or may be a process not utilizing a communication function.

The process instructed by the user instruction may be a process to be executed at a time point when the communication terminal 110 accepted the user instruction. The process instructed by the user instruction may be a process to be executed automatically at a predetermined clock time or every time a predetermined length of time elapses, according to user setting, or may be a process to be executed automatically at a predetermined clock time or every time a predetermined length of time elapses, according to initial setting of the communication terminal 110 or initial setting of a program operating on the communication terminal 110.

The process instructed by the user instruction may be a process of outputting information instructed by the user instruction in a form perceivable to a user. Examples of such a process include: a process of scrolling a display screen of the communication terminal 110 to alter the display position of an image displayed on the display screen; a process of accessing the information providing server 20 to acquire, from the information providing server 20, information instructed by the user to display the acquired information on the display screen of the communication terminal 110; or the like.

The process instructed by the user instruction may be a process that is associated with pressing of a button of or switching of a switch of the communication terminal 110. The process instructed by the user instruction may be a process of turning off a power source of the communication terminal 110. The process instructed by the user instruction may be a process of logging off the communication terminal 110, or may be a process of causing the communication terminal 110 to shift to a sleep state.

When having accepted the user instruction, the environmental information acquiring unit 216 acquires communication environment information of the communication terminal 110, separately from the process instructed by the user instruction. When the process executing unit 214 executes the process instructed by the user instruction, the environmental information acquiring unit 216 may acquire the communication environment information, separately from the process instructed by the user instruction. The environmental information acquiring unit 216 may acquire the communication environment information at a predetermined clock time or every time a predetermined length of time elapses (referred to as timing at which the communication environment information is acquired, in some cases).

According to one embodiment, when the input unit 212 accepted a user instruction instructing activation of a GPS logger, the environmental information acquiring unit 216 acquires the communication environment information every time the GPS logger acquires log information at regular time intervals. According to another embodiment, when the input unit 212 accepted a user instruction instructing activation of mailing software, the environmental information acquiring unit 216 acquires the communication environment information every time the mailing software accesses a mailing server in the background. According to a still another embodiment, when the input unit 212 accepted a user instruction instructing setting of an alarm function, the environmental information acquiring unit 216 acquires the communication environment information at the time when the alarm function is set or actuated.

The environmental information acquiring unit 216 may acquire the communication environment information based on: the length of time from when the information providing server 20 is requested to transmit information instructed by a user until the information is acquired from the information providing server 20; and the information amount of the information. The process of acquiring the communication environment information may be executed in the background.

Thereby, the communication environment information can be acquired while a user is operating the communication terminal 110. Also, even when the communication terminal 110 is executing a process not utilizing a communication function, the communication environment information can be acquired. Furthermore, even if the user does not perform a special operation for acquiring the communication environment information, the communication environment information can be acquired. As a result, the communication status that approximates the actual status of use of the user can be grasped over a wide area. Also, temporal changes of the communication status can be grasped.

When having accepted a user instruction, the positional information acquiring unit 218 acquires the positional information of the communication terminal 110, separately from a process instructed by the user instruction. When the process executing unit 214 executes the process instructed by the user instruction, the positional information acquiring unit 218 may acquire the positional information, separately from the process instructed by the user instruction. When the environmental information acquiring unit 216 acquires the communication environment information, the positional information acquiring unit 218 may acquire the positional information. Thereby, the communication environment information can be associated with the positional information. The process of acquiring the positional information may be executed in the background.

The positional information acquiring unit 218 may acquire the positional information based on at least either information of GPS information and radio wave information from an access point of a wireless communication network or a mobile communication network. The positional information acquiring unit 218 may be a GPS information acquiring apparatus, and may acquire the positional information from a GPS information acquiring apparatus disposed in the communication terminal 110. The positional information acquiring unit 218 may acquire information about GPS precision together with the positional information.

The output unit 222 outputs information instructed by the user instruction in a form perceivable to the user. The output unit 222 may be a display apparatus such as a liquid crystal display or an organic EL display, an audio output apparatus such as a speaker, or a vibration apparatus such as a vibrator.

For example, according to an instruction from a user, the output unit 222 displays an image on a screen or alters a display position of an image displayed on the screen
The output unit 222 may display an image based on information acquired from the information providing server 20 via the communication network 10 or information stored in a memory apparatus of the communication terminal 110. Also, the output unit 222 may output, as audio information from a speaker, information acquired from the information providing server 20 via the communication network 10 or information stored in a memory unit of the communication terminal 110. Thereby, the user can perceive the information.

On the other hand, when a particular process is being executed in the background, information utilized in the process is not output from the output unit 222 in a form perceivable to the user. For this reason, the user cannot perceive the information.

The identification information acquiring unit 224 acquires the terminal identification information identifying each of the communication terminals 110. The identification information acquiring unit 224 may generate the terminal identification information for each of the communication terminals 110 or may receive the terminal identification information from the information collecting server 120. The terminal identification information may be determined randomly by using random numbers for example. The terminal identification information may be updated at a predetermined clock time or every time a predetermined length of time elapses. The identification information acquiring unit 224 may acquire information about a communication terminal 110 such as information indicating the model of the communication terminal 110 or information indicating the OS of the communication terminal 110.

The log information generating unit 226 acquires the communication environment information from the environmental information acquiring unit 216. The log information generating unit 226 may acquire, from the environmental information acquiring unit 216, information indicating a clock time at which the communication environment information was acquired. The log information generating unit 226 acquires, from the positional information acquiring unit 218, positional information indicating the position at which the communication environment information was acquired. The log information generating unit 226 may acquire, from the positional information acquiring unit 218, information about GPS precision at which the positional information was acquired. The log information generating unit 226 may acquire the terminal identification information from the identification information acquiring unit 224.

The log information generating unit 226 generates log information. The log information generating unit 226 generates the log information at least by associating the communication environment information and the positional information with each other. The log information generating unit 226 may generate the log information by associating, with each other, the communication environment information, the positional information, and at least one of: information indicating a clock time at which the communication environment information was acquired, information indicating a GPS intensity at which the positional information was acquired; and information about the communication terminal 110. The process of generating the log information may be executed in the background.

The log information generating unit 226 may decide the communication system being used when the communication environment information was acquired based on information about the latency of data communication included in the communication environment information. For example, when the latency is smaller than a predetermined value, the log information generating unit 226 determines that the communication environment information acquired by the environmental information acquiring unit 216 is information in a case where the communication terminal 110 was communicating by a first communication system (example of which may include the LTE system, the 4G system or the like). On the other hand, when the latency is equal to or larger than a predetermined value, the log information generating unit 226 determines that the communication environment information acquired by the environmental information acquiring unit 216 is information in a case where the communication terminal 110 was communicating by a second communication system (examples of which may include the 3G system or the like). The log information generating unit 226 may generate the log information by associating, with each other, the information about a communication system being used when the communication environment information was acquired, and the communication environment information and the positional information.

The log information generating unit 226 may acquire inner functions of the OS operating on the communication terminal 110. The log information generating unit 226 may decide, based on the acquired inner functions, the communication system being used when the communication environment information was acquired.

The log information generating unit 226 may generate the log information every time the input unit 212 accepts a user instruction. The log information generating unit 226 may generate log information every time a process instructed by a user instruction is executed. The log information generating unit 226 may generate the log information at a predetermined clock time or every time a predetermined length of time elapses (referred to as timing at which the log information is generated, in some cases). The timing at which the log information is generated may be almost the same with or different from the timing at which the communication environment information is acquired.

The log information generating unit 226 may transmit the generated log information to the information collecting server 120. The log information generating unit 226 may transmit the log information to the information collecting server 120 every time the log information is generated. The log information generating unit 226 may transmit, to the information collecting server 120, the generated log information at a predetermined clock time or every time a predetermined length of time elapses (referred to as timing at which the log information is transmitted, in some cases). The timing at which the log information is transmitted may be almost the same with or different from the timing at which the log information is generated.

The log information generating unit 226 may transmit the generated log information to the information collecting server 120 at at least one timing of: at the time of activation of the communication terminal 110; at the time of resumption of the communication terminal 110 from a sleep state; and at the time of activation of a program for causing a computer to function as a part of the communication terminal 110. The log information generating unit 226 may store therein the generated log information after transmitting the log information until next log information is transmitted.

The communication control unit 228 controls communication between the communication terminal 110, and the communication network 10, the information providing server 20 and the information collecting server 120. The communication control unit 228 may be a communication interface. The communication control unit 228 may support a plurality of communication systems.

In the present embodiment, a case where the information collecting server 120 is a server different from the information providing server 20, and the communication terminal 110 transmits communication environment information to the information collecting server 120 was explained. However, the communication status analyzing system 100 is not limited to the present embodiment. According to another embodiment, the communication terminal 110 transmits communication environment information to the information providing server 20. The information providing server 20 stores, in a memory apparatus, the communication environment information received from the communication terminal 110. The information collecting server 120 analyzes the communication status based on the communication environment information stored in the information providing server 20. Also, functions of respective units of the communication terminal 110 are not strictly distinguished, and functions of respective units of the communication terminal 110 are not limited to the above-mentioned embodiment.

In the embodiment above, a case where when the communication terminal 110 accepted a user instruction instructing to execute a process other than a process for acquiring information about a communication environment, the communication status that approximates the actual status of use of a user is grasped over a wide area by acquiring communication environment information and positional information was explained. However, methods of grasping the communication status that approximates the actual status of use of a user over a wide area are not limited to the above-mentioned embodiment.

In another embodiment, after accepting, from a user, an input for starting a process, the communication terminal 110 may automatically acquire information about the communication environment at a predetermined clock time or every time a predetermined length of time elapses. Because the user needs not to perform an operation for acquiring communication environment information every time communication environment information is acquired, he/she can grasp the communication status that approximates the actual status of use of the user over a wide area. Also, temporal changes of the communication status or the like can be grasped.

In this case, the communication terminal 110 may transmit communication environment information to the information collecting server 120 every time it acquires the communication environment information. The communication terminal 110 may memorize the acquired communication environment information, and transmit the memorized communication environment information to the information collecting server 120 according to a predetermined condition. For example, examples of a predetermined condition include: that the number of times of acquisition of communication environment information reached a predetermined number of times; that the information amount of memorized communication environment information reached a predetermined volume; that a predetermined clock time has come; that a predetermined length of time has elapsed; or the like. When not being able to perform communication at timing to transmit communication environment information to the information collecting server 120, the communication terminal 110 may not transmit but memorize acquired communication environment information, and may transmit it at next transmission timing.

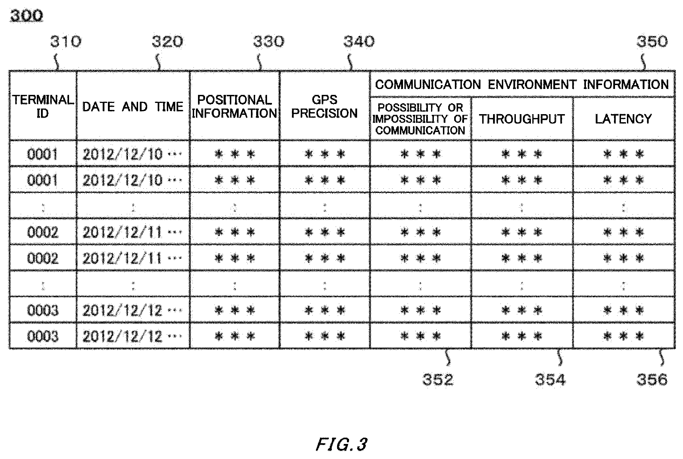

Fig. 3 schematically shows one example of a log information data table 300. The data table 300 stores therein, in association with each other: a terminal ID 310, information about date and time 320 at which communication environment information was acquired; positional information 330 indicating positions at which the communication environment information was acquired; information about GPS precision 340 at which the positional information 330 was acquired; and communication environment information 350. The communication environment information 350 may include information about the possibility or impossibility of communication 352; information about throughputs 354 of data communication, and information about latency 356 of data communication. The terminal ID 310 may be one example of identification information identifying computers.

In the present embodiment, the terminal ID 310 is a randomly selected code string, and updated every other day, for example. Thereby, the information collecting server 120 can analyze log information by considering temporal relevance of the log information without identifying users. The terminal ID 310 may be updated every time a predetermined period of time elapses, or may be updated based on signals from the outside

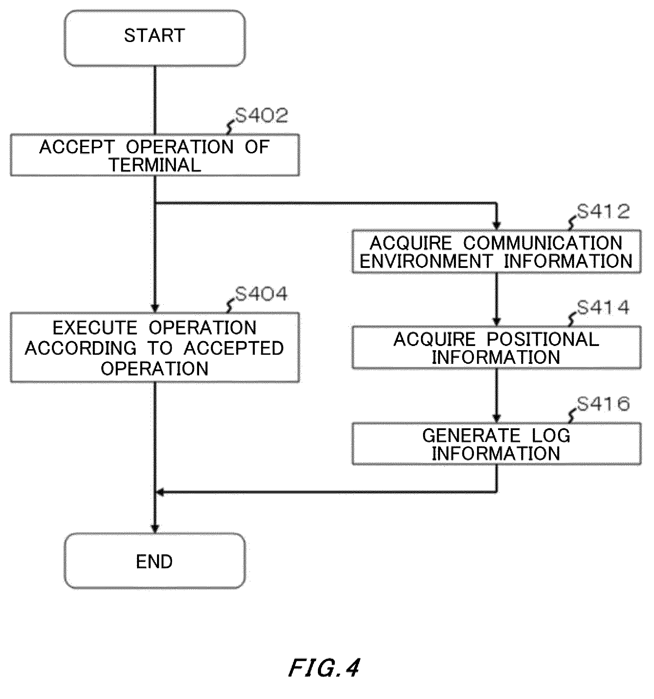

Fig. 4 schematically shows one example of an operation of the communication terminal 110. By using Fig. 4, an operation by the communication terminal 110 of generating log information when a process instructed a user instruction is a process not utilizing a communication function and the communication terminal 110 does not access the information providing server 20 is explained.

According to the present embodiment, at Step 402 (Steps are abbreviated to Ss, in some cases), the input unit 212 accepts, from a user, a user instruction about an operation of the communication terminal 110. For example, a user instruction to scroll a screen is accepted. At S404, the process executing unit 214 executes a process according to an operation instructed by the user instruction.

On the other hand, at S412, in the background of S404, the environmental information acquiring unit 216 acquires communication environment information. When a process instructed by the user instruction is a process not utilizing a communication function, the environmental information acquiring unit 216 at least acquires information about the possibility or impossibility of communication. If communication is possible, the environmental information acquiring unit 216 may acquire information about at least one of radio wave intensity, communication system and communication carrier.

At S414, in the background of S404, the positional information acquiring unit 218 acquires positional information. After S414, at S416, in the background of S404, the log information generating unit 226 generates log information and terminates a process. The order and timing of performing respective steps in the present embodiment can be altered as needed, as long as such alteration does not generate technical contradictions.

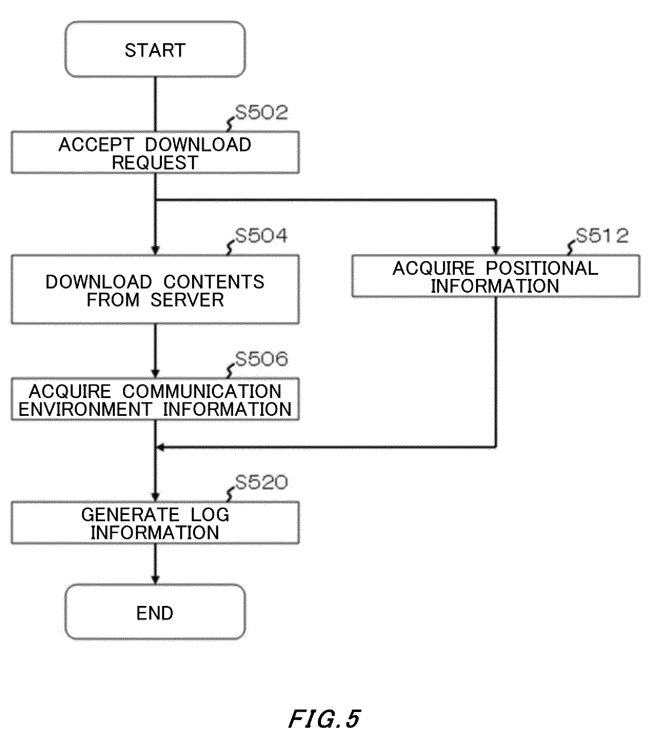

Fig. 5 schematically shows another example of an operation of the communication terminal 110. By using Fig. 5, an operation by the communication terminal 110 of generating log information when a process instructed a user instruction is a process utilizing a communication function and the communication terminal 110 accesses the information providing server 20 to acquire information is explained.

According to the present embodiment, at S502, the input unit 212 accepts, from a user, a user instruction to access the information providing server 20 to acquire, from the information providing server 20, information instructed by the user.
For example, the input unit 212 accepts a user instruction to acquire information about restaurants that meet a search condition. At S504, the process executing unit 214 executes the process instructed by the user instruction to download corresponding contents from the information providing server 20.

At S506, the environmental information acquiring unit 216 acquires communication environment information. The process of S506 may be executed in the background. The environmental information acquiring unit 216 at least acquires information about the possibility or impossibility of communication. When the process instructed by the user instruction is a process utilizing a communication function, the environmental information acquiring unit 216 may further acquire information about at least one of radio wave status, radio wave intensity, communication speed, throughput of data communication, latency of data communication, communication system and communication carrier. The environmental information acquiring unit 216 may acquire the communication environment information based on: the length of time from when the information providing server 20 is requested to transmit information instructed by a user until the information is acquired from the information providing server 20; and the information amount of the information.

On the other hand, at S512, in the background of at least either of S504 and S506, the positional information acquiring unit 218 acquires positional information. After S506 and S512, at S520, the log information generating unit 226 generates log information and terminates the process. The process of S520 may be executed in the background. The order and timing of performing respective steps in the present embodiment can be altered as needed, as long as such alteration does not generate technical contradictions.

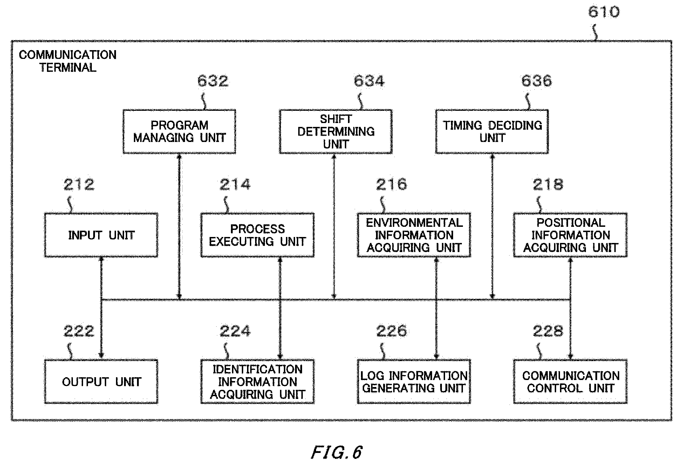

Fig. 6 schematically shows one example of a communication terminal 610. The communication terminal 610 may configure a part of the communication status analyzing system 100 in place of the communication terminal 110 or together with the communication terminal 110. The communication terminal 610 is different from the communication terminal 110 in that it comprises a program managing unit 632, a shift determining unit 634 and a timing deciding unit 636. The communication terminal 610 may have a similar configuration to that of the communication terminal 110 in other respects than the above-mentioned differences.

It was explained in relation to the communication terminal 110 that the environmental information acquiring unit 216 may execute a process of acquiring communication environment information in the background, and that the positional information acquiring unit 218 may execute a process of acquiring positional information in the background. However, in some cases, OSs (Operating Systems) of communication terminals limit an operation of a program in the background state.

For example, in iOS (trademark) provided by Apple Inc., there are two activation states in each of the foreground state and the background state. Specifically, in the foreground state, there are two activation states: a state where a program is in the foreground but not being utilized (preferred to as Inactive, in some cases); and a state where a program is in the foreground and being utilized (referred to as Active, in some cases). In the background state, there are two activation states: a state where a program is in the background but still being operating (preferred to as Background or Background Running, in some cases); and a state where a program is in the background and not being operating (referred to as Suspended, in some cases).

In iOS, when a predetermined length of time has elapsed after the activation state of a program shifted to "Background Running," the activation state of the program is forced to shift to "Suspended" except for some exceptional processes. Because a program cannot continue with processes when the activation state of the program shifts to "Suspended," a process of acquiring communication environment information can no longer be executed in the background once the activation state of a program for realizing the environmental information acquiring unit 216 shifted to "Suspended," for example.

According to the communication terminal 610, information processing apparatus, method and program that enable execution of a process of acquiring communication environment information when the position of the communication terminal 610 has changed to a degree that exceeds a predetermined degree even when the OS limits an operation of a program in the background state are provided. In this case, the communication terminal 610 may execute a process of acquiring communication environment information in the background.

Similar to respective units of the communication terminal 110, respective units of the communication terminal 610 may be realized by hardware, may be realized by software, or may be realized by a combination of hardware and software. Also, execution of programs may allow a computer to function as a part of the communication terminal 610. The programs may be memorized in a computer-readable medium such as a CD-ROM, a DVD-ROM, a memory and a hard disk, or may be memorized in a memory apparatus connected to a network. The programs may be installed on a computer of the communication terminal 610 from a computer-readable medium or a memory apparatus connected to a network. The communication terminal 610 may be one example of an information processing apparatus having a communication function, and comprising a processor and a memory apparatus memorizing a command or program to be executed by the processor.

The program managing unit 632 manages the activation state of a program operating on the communication terminal 610. In the present embodiment, the program managing unit 632 manages the activation state of a program for acquiring information about the communication environment of the communication terminal 610. The program for acquiring information about the communication environment of the communication terminal 610 may be a program for causing a computer of the communication terminal 610 to function at least as the environmental information acquiring unit 216. The program for acquiring information about the communication environment of the communication terminal 610 may be a program for causing a computer of the communication terminal 610 to function as respective units of the communication terminal 610. The program managing unit 632 may be a part of functions provided by the OS of the communication terminal 610, and modules of the OS of the communication terminal 610 may function as the program managing unit 632 by being read into a computer of the communication terminal 610.

When having acquired information indicating that a predetermined type of event has occurred, the program managing unit 632 transmits, to one or more programs whose operation has stopped in the background, information indicating that the event has occurred. When having received, from the program that received the above-mentioned information, a request to alter the activation state of the program, the program managing unit 632 alters the activation state of the program according to the request. The program managing unit 632 may be one example of a positional change information acquiring unit that acquires positional change information.

In the present embodiment, when having acquired information indicating that the change amount of the position of the communication terminal 610 has exceeded a predetermined value, the program managing unit 632 transmits, to one or more programs whose operations have stopped in the background, the information or information indicating that the information was acquired (these pieces of information may be one example of positional change information). When having received, from any of the one or more programs that have received the above-mentioned information, a request to alter the activation state of the program, the program managing unit 632 alters the activation state of the program. Thereby, for example, a program for acquiring information about the communication environment of the communication terminal 610 shifts from a state where a program stops an operation in the background as in "Suspended" to a state where a program operates in the background as in "Background Running."

The program managing unit 632 may acquire, from an external server (not illustrated) via the communication network 10, information indicating that the change amount of the position of the communication terminal 610 has exceeded a predetermined value. For example, the communication terminal 610 is receiving radio waves from a base-station or an access point (referred to as a base-station or the like, in some cases) regardless of the activation state of a program operating on the communication terminal 610. Radio waves from a base-station or the like include identification information identifying a base-station or an access point. The communication terminal 610 regularly transmits, to a server storing therein base station identification information and positional information of the base-station in association with each other, base station identification information included in radio waves from a base-station.

When a change in the position of the communication terminal 610 satisfies a predetermined condition, the server transmits, to the communication terminal 610, information indicating that the change amount of the position of the communication terminal 610 has exceeded a predeteimined value. The program managing unit 632 acquires the above-mentioned information for example via the communication control unit 228. Thereby, while restraining the power consumption of the communication terminal 610, when the position of the communication terminal 610 has been altered significantly, the activation state of a particular program can be altered.

In the present embodiment, a case where the program managing unit 632 acquires, from an external server, information indicating that change amount of the position of the communication terminal 610 has exceeded a predetermined value was explained. However, the program managing unit 632 is not limited to the present embodiment. For example, the program managing unit 632 acquires the positional information of the communication terminal 610 from the positional information acquiring unit 218 to determine whether or not the change amount of the position of the communication terminal 610 has exceeded a predetermined value. When having determined that the change amount of the position of the communication terminal 610 has exceeded a predetermined value, the program managing unit 632 may transmit, to one or more programs whose operations have stopped in the background, information indicating that the change amount of the position of the communication terminal 610 has exceeded a predetermined value (the information may be one example of positional change information).

The shift determining unit 634 receives, from the program managing unit 632, information indicating that an event has occurred. The shift determining unit 634 determines whether or not to cause the activation state of a program to shift. When the above-mentioned event included in the received information is a predetermined event for causing the activation state of the program to shift, the shift determining unit 634 decides to cause the activation state of the program to shift. When having decided to cause the activation state of the program to shift, the shift determining unit 634 transmits, to the program managing unit 632, a request for causing the activation state of the program to shift. The shift determining unit 634 may be one example of a positional change information acquiring unit that acquires positional change information.

In the present embodiment, the shift determining unit 634 is a module of a program for acquiring information about the communication environment of the communication terminal 610, and when having received, from the program managing unit 632, information indicating that that a predetermined type of event has occurred, determines whether or not to cause the activation state of the program for acquiring information about the communication environment of the communication terminal 610 to shift. When the information received from the program managing unit 632 includes information indicating that the change amount of the position of the communication terminal 610 has exceeded a predetermined value or information indicating that the information was acquired, the shift determining unit 634 decides to cause the activation state of the program for acquiring information about the communication environment of the communication terminal 610 to shift from a state where an operation is stopped in the background to a state where the operation is executed in the background.

According to the present embodiment, even if the program for acquiring information about the communication environment of the communication terminal 610 is in a state where its operation is stopped in the background, the program can shift to a state where its operation is executed in the background when the communication terminal 610 has been moved by a certain distance. Thereby, the communication terminal 610 can execute, in the background, a process of acquiring information about the communication environment.

The timing deciding unit 636 decides timing at which the communication terminal 610 executes a process of acquiring information about the communication environment of the communication terminal 610. The timing decided by the timing deciding unit 636 may be any timing after the program for acquiring information about the communication environment of the communication terminal 610 shifts from the foreground state or a state where its operation is stopped in the background to a state where its operation is executed in the background until a predetermined period of time elapses.

The timing deciding unit 636 may decide the above-mentioned timing according to a predetermined rule. In one embodiment, the timing deciding unit 636 may decide the above-mentioned timing randomly by using a random number table, a random number generation algorithm or the like. Thereby, bias in data can be prevented. In another embodiment, every time the above-mentioned timing is decided, the timing deciding unit 636 may memorize the decided timing, and after the above-mentioned program shifts to a state where its operation is executed in the background, may decide the above-mentioned timing so that time until a process of acquiring information about the communication environment is executed conforms to a predetermined distribution. Thereby, data according to the intended use of data can be collected while preventing bias in data.

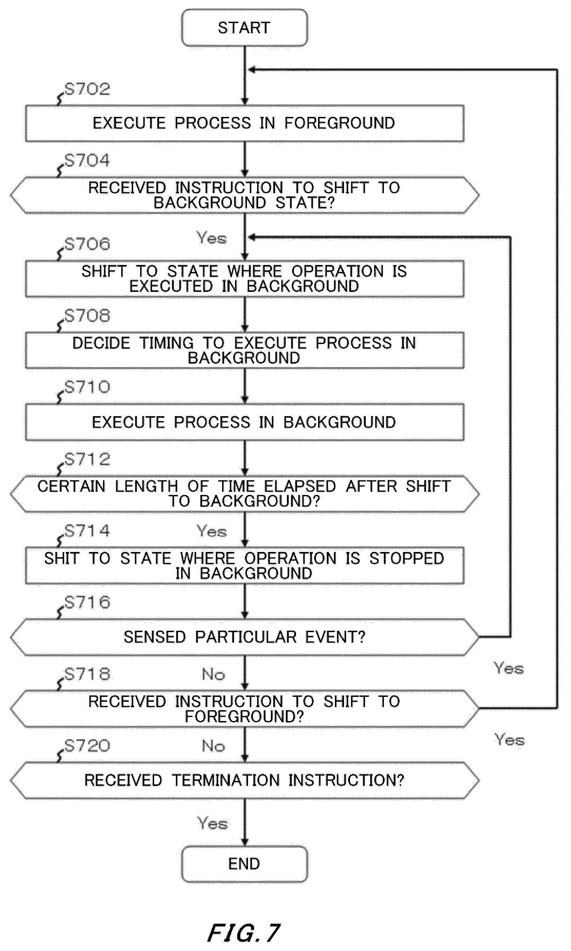

Fig. 7 schematically shows one example of an operation of the communication terminal 610. In the present embodiment, operations of respective units of the communication terminal 610 are explained with an exemplary case where the program for acquiring information about the communication environment of the communication terminal 610 causes a computer of the communication terminal 610 to function as the input unit 212, the process executing unit 214, the environmental information acquiring unit 216, the positional information acquiring unit 218, the output unit 222, the identification information acquiring unit 224, the log information generating unit 226, the shift determining unit 634 and the timing deciding unit 636, and the OS of the communication terminal 610 causes a computer of the communication terminal 610 to function as the communication control unit 228 and the program managing unit 632.

At Step 702 (Steps are abbreviated to Ss, in some cases), the program for acquiring information about the communication environment of the communication terminal 610 executes a process in the foreground. For example, the input unit 212 executes a user instruction acceptance procedure of accepting a user instruction. The process executing unit 214 executes a process execution procedure of executing a process instructed by a user instruction. When having accepted a user instruction or a process instructed by a user instruction is executed, the environmental information acquiring unit 216 executes a communication environment information acquiring procedure of acquiring information about the communication environment of the communication terminal 610. Also, when having accepted a user instruction or a process instructed by a user instruction is executed, the positional information acquiring unit 218 executes a positional information acquiring procedure of acquiring the positional information of the communication terminal 610.

At S704, the program managing unit 632 determines whether or not the input unit 212 received, from a user, a shift instruction to cause the program for acquiring information about the communication environment of the communication terminal 610 to shift to the background state. Here, the background state includes a state where an operation is executed in the background like "Background Running" and a state where an operation is stopped in the background like "Suspended."

When the program managing unit 632 determine at S704 that a shift instruction from a user is received (Yes at S704), at S706, the program managing unit 632 causes the program for acquiring information about the communication environment of the communication terminal 610 to shift to a state where its operation is executed in the background. At S708, the timing deciding unit 636 decides timing at which the environmental information acquiring unit 216 executes a process of acquiring information about the communication environment of the communication terminal 610.

At S710, the environmental information acquiring unit 216 executes, in the background, a process of acquiring information about the communication environment of the communication terminal 610 at the timing decided by the timing deciding unit 636. Examples of communication environment information acquired in the process of S710 include information about: the possibility or impossibility of communication, and the radio wave status (examples of which include radio wave reception level, radio wave intensity, RSCP (Received Signal Code Power), CID (Cell ID) or the like); the communication system; the communication carrier; or the like. At the timing at which the environmental information acquiring unit 216 executes the process, the positional information acquiring unit 218, the identification information acquiring unit 224 and the log information generating unit 226 may execute respective processes.

At S712, the program managing unit 632 determines whether or not a predetermined length of time has elapsed after the program for acquiring information about the communication environment of the communication terminal 610 shifted to a state where its operation is executed in the background. When the program managing unit 632 determines at S712 that the predetermined length of time has elapsed (Yes at S712), at S714, the program managing unit 632 causes the program for acquiring information about the communication environment of the communication terminal 610 to shift to a state where its operation is stopped in the background.

At S716, when having sensed occurrence of a predetermined type of event, the program managing unit 632 transmits, to the shift determining unit 634, information indicating that that the event occurred. In the present embodiment, the program managing unit 632 receives, from an external server (not illustrated) via the communication network 10 and the communication control unit 228, information indicating that the change amount of the position of the communication terminal 610 has exceeded a predetermined value to transmit, to the shift determining unit 634, the information or information indicating that the information was acquired.

The shift determining unit 634 acquires information indicating that a predetermined type of event occurred in a state where an operation of the program for acquiring information about the communication environment of the communication terminal 610 is stopped in the background. When the shift determining unit 634 determines that the event included in the information received from the program managing unit 632 is a predetermined event for causing the activation state of the program to shift (Yes at S716), the shift determining unit 634 transmits, to the program managing unit 632, a request for causing the activation state of the program to shift. The predetermined event for causing the activation state of the program to shift may be that the change amount of the position of the communication terminal 610 has exceeded a predetermined value. When having received a request for causing the activation state of the program to shift, the program managing unit 632 causes the program for acquiring information about the communication environment of the communication terminal 610 to shift to a state where its operation is executed in the background.

On the other hand, when the shift determining unit 634 determines that the predetermined event for causing the activation state of the program to shift has not occurred (No at S716), the procedure proceeds to a process of S718. At S718, the program managing unit 632 determines whether or not the input unit 212 received, from a user, a shift instruction to cause the program for acquiring information about the communication environment of the communication terminal 610 to shift to the foreground state.

When the program managing unit 632 determines at S718 that a shift instruction from a user is received (Yes at S718), the program for acquiring information about the communication environment of the communication terminal 610 is caused to shift to the foreground state. On the other hand, at S718, when the program managing unit 632 determines that a shift instruction from a user is not received (No at S718), the procedure proceeds to a process of S720.

At S720, the program managing unit 632 determines whether or not the input unit 212 received, from a user, an instruction to terminate the program for acquiring information about the communication environment of the communication terminal 610. When the program managing unit 632 determines at S720 that a termination instruction from the user is received (Yes at S720), the program managing unit 632 terminates the program for acquiring information about the communication environment of the communication terminal 610 to complete a process.

In the present embodiment, a case where when the program managing unit 632 determines at S704 that a shift instruction from a user is received, at S706, the program managing unit 632 once causes the program for acquiring information about the communication environment of the communication terminal 610 to shift to a state where its operation is executed in the background, and the communication terminal 610 executes the processes at S708 to S712 was explained. However, an operation of the communication terminal 610 is not limited to the present embodiment. In another embodiment, when the program managing unit 632 determines at S704 that a shift instruction from a user is received, the processes of S708 to S712 may be skipped, and the program managing unit 632 may cause the program for acquiring information about the communication environment of the communication terminal 610 to shift to a state where its operation is stopped in the background.

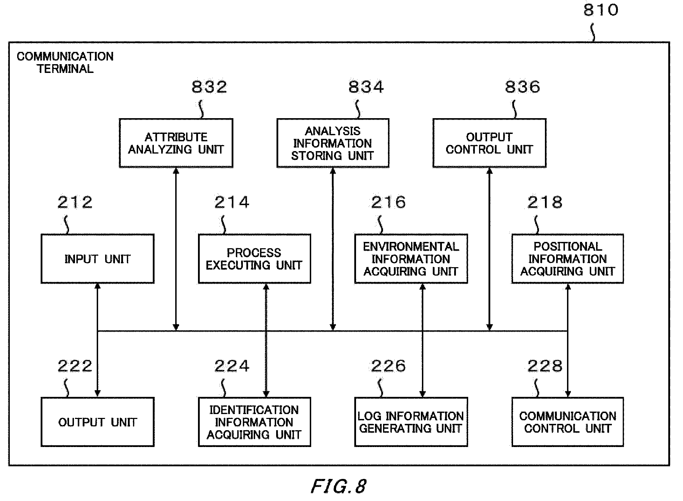

Fig. 8 schematically shows one example of a communication terminal 810. The communication terminal 810 may configure a part of the communication status analyzing system 100 in place of the communication terminal 110 and communication terminal 610 or together with these communication terminals. The communication terminal 810 is different from the communication terminal 110 in that it comprises an attribute analyzing unit 832, an analysis information storing unit 834 and an output control unit 836. The communication terminal 810 may have a similar configuration to that of the communication terminal 110 in other respects than the above-mentioned differences. Each of the communication terminal 810 and the attribute analyzing unit 832 may be one example of an attribute analyzing apparatus.

The attribute analyzing unit 832 analyzes at least either of an operation history of the communication terminal 810 and a movement history of the communication terminal 810 to decide an attribute of a user of the communication terminal 810. The attribute analyzing unit 832 may analyze at least either of the operation history of the communication terminal 810 and the movement history of the communication terminal 810 to decide an attribute pattern conforming to an attribute of a user of the communication terminal 810 from among one or more predetermined attribute patterns.

The operation history of the communication terminal 810 may be a history of instructions from a user that the communication terminal 810 has accepted. Examples of an operation history of the communication terminal 810 include: a browsing history of a browser; a history of searches on the Internet, a history of accesses to Web sites, a purchase history of on-line shopping; a history of inputs to the input unit 212; ON/OFF of a power source; ON/OFF of a manner mode; alteration of communication systems.

The movement history of the communication terminal 810 may be a history of positional information of the communication terminal 810 acquired by the positional information acquiring unit 218. The movement history of the communication terminal 810 may be a history of moving speeds and movement directions at a particular position,
The movement history of the communication terminal 810 may be a history of facilities where the user of the communication terminal 810 has stayed. The history of facilities where the user of the communication terminal 810 has stayed may be associated with attributes of the facilities. When the positional information of the communication terminal 810 indicates that the position of the communication terminal 810 is within a predetermined geographical range for a length of time longer than a predetermined length of time, it may be determined that the user of the communication terminal 810 is staying at a facility present in the geographical range. Examples of facilities include stores, event venues, railway routes, airports, ports, highways and the like. One or more pieces of log information may be one example of the movement history.

The analysis information storing unit 834 stores therein information to be used in analysis of an attribute at the attribute analyzing unit 832. The analysis information storing unit 834 may store therein information generated in a course of analysis of an attribute at the attribute analyzing unit 832. The analysis information storing unit 834 may store therein a result of analysis of an attribute of a user at the attribute analyzing unit 832. The analysis information storing unit 834 may be one example of at least either of an appearance information storing unit and an attribute information storing unit.

The analysis result of an attribute of a user may be information indicating whether or not each of one or more predetermined attribute patterns conforms to an attribute of a user of the communication terminal 810. The analysis result of an attribute of a user may be information identifying an attribute pattern determined as conforming to an attribute of a user of the communication terminal 810.

The output control unit 836 controls the output unit 222. The output control unit 836 receives, from another component of the communication terminal 810, information that should be output to the output unit 222. The output control unit 836 controls a method of outputting the received information based on an attribute of the received information, and a result of analysis of an attribute of a user stored in the analysis information storing unit 834.

The output control unit 836 may analyze the received information to decide an attribute of the information. For example, the output control unit 836 decides an attribute of the information by deriving information indicating an attribute of the information from the received information. The output control unit 836 may decide an attribute of the information based on contents of the received information, the transmission source of the received information or the like. Examples of contents of the received information include: text contents; colors of images and videos; features of people or objects included in image or videos; contents of audio data; or the like. The output control unit 836 preferably decides an attribute of the information without identifying personal information.

In one embodiment, the output control unit 836 decides whether or not to output the received information to the output unit 222 based on an attribute of the received information, and a result of analysis of an attribute of a user stored in the analysis information storing unit 834. For example, the output control unit 836 compares an attribute of the received information with an attribute of a user of the communication terminal 810, and when they match or are similar to each other, decides to output the received information to the output unit 222. Also, the output control unit 836 compares an attribute of the received information with an attribute of a user of the communication terminal 810, and when they do not match and are not similar to each other, decides not to output the received information to the output unit 222.

In another embodiment, the output control unit 836 may decide at least either of a mode of outputting the received information and setting of the output unit 222 based on an attribute of the received information and a result of analysis of an attribute of a user stored in the analysis information storing unit 834. Examples of a mode of outputting the received information include a position, a size and a color, a tone color, a vibration pattern, a light-emission pattern or the like with which the received information is output on the output unit 222. Examples of setting of the output unit 222 include brightness of a screen, volume of audio, or the like.

For example, when the communication terminal 810 received HTML data from the information providing server 20 via the communication network 10, and advertisement information is included in the HTML data, the output control unit 836 compares an attribute indicating the target of the advertisement information with an attribute of a user of the communication terminal 810. When the attribute indicating the target of the advertisement information matches the attribute of the user of the communication terminal 810, the output control unit 836 controls the output unit 222 to make the advertisement information noticeable. When the attribute indicating the target of the advertisement information does not match attribute of the user of the communication terminal 810, the output control unit 836 may control the output unit 222 to make the advertisement information not noticeable, or may control the output unit 222 not to display the advertisement information.

Because according to the present embodiment, the communication terminal 810 has the attribute analyzing unit 832, the attribute of the user of the communication terminal 810 can be decided without transmitting an operation history of the communication terminal 810 or the like to an external server. Thereby, the privacy of the user of the communication terminal 810 can be protected further.

In the present embodiment, a case where the attribute analyzing unit 832 is disposed in the communication terminal 810 was explained. However, the attribute analyzing unit 832 is not limited to the present embodiment. In another embodiment, the attribute analyzing unit 832 may be disposed in a computer that transmits and receives information to and from the communication terminal 810 via the communication network 10. The attribute analyzing unit 832 may be disposed in the information collecting server 120.

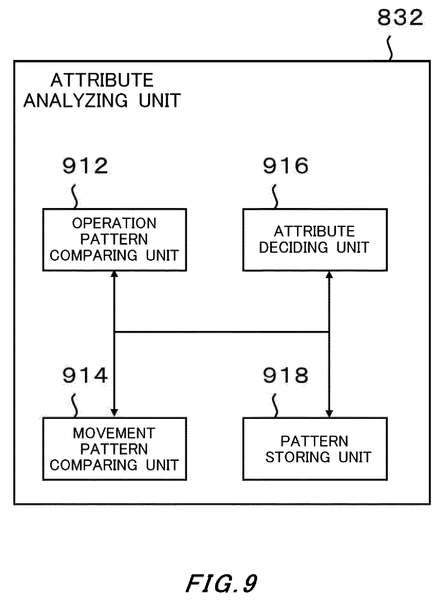

Fig. 9 schematically shows one example of the attribute analyzing unit 832. In the present embodiment, the attribute analyzing unit 832 comprises an operation pattern comparing unit 912, a movement pattern comparing unit 914, an attribute deciding unit 916 and a pattern storing unit 918.

The operation pattern comparing unit 912 compares an operation history of the communication terminal 810 with one or more predetermined operation patterns to decide at least either of an appearance frequency and an appearance probability of each of one or more operation patterns in a predetermined period of time. The predetermined period of time may be the same period of time as an update period of the terminal ID 310 or may be a different period of time. The operation pattern comparing unit 912 stores the decided appearance frequency and appearance probability in the analysis information storing unit 834.

Examples of operation patterns include: that an instruction to browse a particular type of Web site was accepted; that an input conforming to a particular keyword was accepted: that an instruction to execute a particular operation was accepted; that time from a particular operation until a particular operation conforms to a predetermined time category; a combination of these patters; or the like. According to one embodiment, the one or more operation patterns include an operation pattern that an instruction to browse a Web site of a restaurant that serves Japanese foods was accepted; an operation pattern that an instruction to browse a search site of restaurants was accepted; and an operation pattern that time from when a power source is turned off until the power source is turned on is one hour or longer and shorter than five hours. Also, operation patterns may be the order in which a plurality of operations are executed.

The operation pattern comparing unit 912 decides at least either of an appearance frequency and an appearance probability according to the following procedure, for example. The operation pattern comparing unit 912 monitors instructions from a user that the communication terminal 810 accepted. When the communication terminal 810 accepts an instruction from a user, the operation pattern comparing unit 912 compares the instruction from the user with each of the one or more operation patterns stored in the pattern storing unit 918 to determine whether or not the instruction from the user conforms to each of the one or more operation patterns stored in the pattern storing unit 918. The operation pattern comparing unit 912 repeats the above-mentioned operation in a predetermined period of time, and calculates at least either of the appearance frequency and the appearance probability, of each of the one or more operation patterns stored in the pattern storing unit 918, of a phenomenon that "an instruction from a user conforms to the pattern."

The operation pattern comparing unit 912 may decide at least either of the appearance frequency and the appearance probability of each of one or more categories about time. For example, for each of one or more categories about time, the operation pattern comparing unit 912 derives data corresponding to the category out of data collected by monitoring instructions from a user. Then, for each category, the operation pattern comparing unit 912 calculates at least either of the appearance frequency and the appearance probability of each of the one or more operation patterns.

The operation pattern comparing unit 912 may decide at least either of the appearance frequency and the appearance probability for each of the one or more categories about time based on an instruction from a user that the communication terminal 810 accepted, and information acquired from a clock or a calendar provided to the communication terminal 810, a Web site or the like. Information about time may be included in the log information. Examples of one or more of categories about time include time zones, types of days of week, seasons, combinations of these or the like. The types of days of week may be categories like respective days of week or may be categories like weekdays and holidays. The operation pattern comparing unit 912 may decide at least either of the appearance frequency and the appearance probability about at least one of the one or more categories about time.

The operation pattern comparing unit 912 may decide at least either of the appearance frequency and the appearance probability for each of the one or more categories about an external environment of a communication terminal. Examples of an external environment of a communication terminal include: climate situations; communication environments; situations about events such as concerts or athletic meeting that are taking place; the operation situations of public transportations; congestion situations of roads; combinations of these; or the like. Examples of communication environments include: a case where it is determined that a communication terminal is present inside; a case where it is determined that a communication terminal is present outside; a case where the communication speed is determined to be higher than a particular value; a case where the communication speed is determined to be lower than a particular value; or the like. The information about an external environment of a communication terminal may be included in the log information. The operation pattern comparing unit 912 may acquire the information about an external environment of a communication terminal from a Web site or the like. The operation pattern comparing unit 912 may decide at least either of the appearance frequency and the appearance probability about at least one of the one or more categories about an external environment of a communication terminal.

When the operation pattern comparing unit 912 decides at least either of the appearance frequency and the appearance probability for each of the one or more categories about climate, the operation pattern comparing unit 912 may decide at least either of the appearance frequency and the appearance probability for each of the one or more categories about climate based on an instruction from a user that the communication terminal 810 accepted, and information acquired from a temperature sensor provided to the communication terminal 810, a Web site or the like. Examples of one or more categories about climate include weather types, temperature categories, combinations of these or the like. Examples of weather types include categories like fine weather, cloudy weather, rainy weather, typhoon, warning being issued, or the like. Examples of temperature categories include categories like: lower than 0 degree; 0 degree or higher and lower than 10 degrees; 10 degrees or higher and lower than 20 degrees; 20 degrees or higher and lower than 30; 30 degrees or higher; or the like.

When at least either of the appearance frequency and the appearance probability is decided in each case of a case where the operation pattern comparing unit 912 decides that the communication terminal 810 is present inside and a case where the operation pattern comparing unit 912 decides that the communication terminal 810 is present outside, the operation pattern comparing unit 912 may decide whether the communication terminal 810 is present inside or present outside based on information about the GPS precision of GPS information acquired by the positional information acquiring unit 218. For example, when the value of CEP is higher than a particular value, the operation pattern comparing unit 912 decides that the communication terminal 810 is present inside, and when the value of CEP is lower than a particular value, the operation pattern comparing unit 912 decides that the communication terminal 810 is present outside.

The operation pattern comparing unit 912 may decide at least either of the appearance frequency and the appearance probability for each of the one or more categories about time and an external environment of a communication terminal. The operation pattern comparing unit 912 may decide at least either of the appearance frequency and the appearance probability about at least one of the one or more categories about time and an external environment of a communication terminal.

The movement pattern comparing unit 914 compares a movement history of the communication terminal 810 with one or more predetermined movement patterns to decide the appearance frequency or the appearance probability of each of one or more movement patterns in a predetermined period of time. The predetermined period of time may be the same period of time as an update period of the terminal ID 310 or may be a different period of time. The movement pattern comparing unit 914 stores the decided appearance frequency and appearance probability in the analysis information storing unit 834. The movement pattern comparing unit 914 may decide the appearance frequency or the appearance probability by a procedure similar to the process at the operation pattern comparing unit 912.

Examples of movement patterns include: staying at facilities having a particular attribute; the moving distance from a particular facility to another facility conforming to a predetermined distance category; the length of time after departure from a particular facility until returning to the facility conforming to a predetermined time category; the moving speed conforming to a predetermined speed category; execution of a predetermined operation at a particular position; combinations of these; or the like. According to one embodiment, the one or more movement patterns include: a movement pattern that the moving distance from a home to another facility is 1 km or longer and shorter than 10 km; a movement pattern that the length of time after departure from a home until returning back to the home is 5 minutes or longer and shorter than 30 minutes; a movement pattern that a power source of the communication terminal 810 is turned off along a railway line; or the like.

The movement pattern comparing unit 914 may decide at least either of the appearance frequency and the appearance probability for each of the one or more categories about time in a manner similar to that of the operation pattern comparing unit 912. The movement pattern comparing unit 914 may decide at least either of the appearance frequency and the appearance probability about at least one of the one or more categories about time. The movement pattern comparing unit 914 may decide at least either of the appearance frequency and the appearance probability for each of the one or more categories about an external environment of a communication terminal in a manner similar to that of the operation pattern comparing unit 912. The movement pattern comparing unit 914 may decide at least either of the appearance frequency and the appearance probability about at least one of the one or more categories about an external environment of a communication terminal. The movement pattern comparing unit 914 may decide at least either of the appearance frequency and the appearance probability for each of the one or more categories about an external environment of a communication terminal. The movement pattern comparing unit 914 may decide at least either of the appearance frequency and the appearance probability about at least one of the one or more categories about an external environment of a communication terminal.

The attribute deciding unit 916 may decide an attribute pattern conforming to an attribute of a user of the communication terminal 810 from among one or more predetermined attribute patterns based on at least either of the appearance frequency and the appearance probability for each of the one or more operation patterns. The attribute deciding unit 916 may decide an attribute pattern conforming to an attribute of a user of the communication terminal 810 from among one or more predetermined attribute patterns based on at least either of the appearance frequency and the appearance probability for each of the one or more movement patterns. The attribute deciding unit 916 may decide an attribute pattern conforming to an attribute of a user the communication terminal 810 from among one or more predetermined attribute patterns based on at least either of the appearance frequency and the appearance probability for each of the one or more operation patterns and at least either of the appearance frequency and the appearance probability for each of the one or more movement patterns.

The attribute deciding unit 916 may refer to the pattern storing unit 918 to decide whether or not an attribute of a user of the communication terminal 810 corresponds to each of one or more attribute patterns. The attribute deciding unit 916 may store, in the analysis information storing unit 834, an attribute pattern decided as conforming to an attribute of a user of the communication terminal 810. The attribute deciding unit 916 may assess whether or not an attribute of a user of the communication terminal 810 corresponds to each of one or more attribute patterns by using numerical values. For example, the attribute deciding unit 916 refers to the pattern storing unit 918 to calculate a numerical value indicating the likelihood that an attribute of a user of the communication terminal 810 corresponds to each of one or more attribute patterns. For example, the attribute deciding unit 916 calculates, as the degree of similarity ranging from 0% to 100%, the rate of matching conditions from among a plurality of conditions for judging whether or not an operation history of the communication terminal 810 corresponds to a particular operation pattern.

The pattern storing unit 918 stores therein, for each of one or more operation patterns and in association with each other: operation pattern identification information identifying each of the one or more operation patterns; and condition for judging whether or not an operation history of the communication terminal 810 corresponds to each of the one or more operation patterns. The pattern storing unit 918 stores therein, for each of the one or more movement patterns and in association with each other: movement pattern identification information identifying each of the one or more movement patterns; and conditions for judging whether or not a movement history of the communication terminal 810 corresponds to each of the one or more movement patterns. The pattern storing unit 918 stores therein, for each of the one or more attribute patterns and in association with each other: attribute pattern identification information identifying each of the one or more attribute patterns; and conditions for judging whether or not an attribute of a user of the communication terminal 810 corresponds to each of the one or more attribute patterns.

The pattern storing unit 918 may analyze at least either of the operation history and the movement history from one or more communication terminals to update the above-mentioned conditions stored in the pattern storing unit 918. The pattern storing unit 918 may analyze at least either of the operation history and the movement history from one or more communication terminals to derive a new operation pattern and generate a condition for judging whether or not the new operation pattern is met. For example, the pattern storing unit 918 transmits, to a communication terminal, a question for deciding an attribute of a user of the communication terminal, and determines an attribute of the user based on the operation history of the user with respect to the question. Alternatively, a user having a particular operation history is determined as having a particular attribute. Next, at least either of operation histories or movement histories of a plurality of users determined as having the same attribute is compared with each other to derive at least either of an operation pattern and a movement pattern having a high appearance frequency or appearance probability. Thereby, the above-mentioned conditions can be updated or generated.

In the present embodiment, a case where the attribute analyzing unit 832 comprises the operation pattern comparing unit 912 and the movement pattern comparing unit 914 was explained. However, the attribute analyzing unit 832 is not limited to the present embodiment. In another embodiment, the attribute analyzing unit 832 may comprise at least either of the operation pattern comparing unit 912 and the movement pattern comparing unit 914.

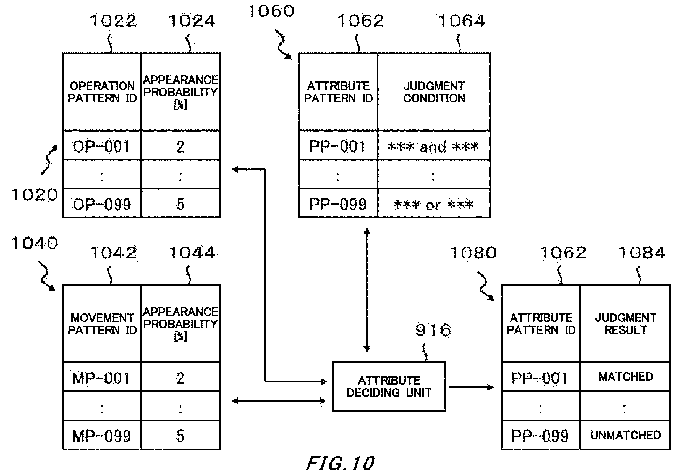

Fig. 10 schematically shows one example of information processing at the attribute deciding unit 916. As shown in Fig. 10, the attribute deciding unit 916 refers to a data table 1020, a data table 1040 and a data table 1060 stored in the analysis information storing unit 834 to generate a data table 1080. The attribute deciding unit 916 stores the generated data table 1080 in the analysis information storing unit 834.

The data table 1020 stores therein, in association with each other, an operation pattern ID 1022 and an appearance probability 1024 of an operation pattern identified by the operation pattern ID 1022. The operation pattern ID 1022 may be one example of operation pattern identification information.

The data table 1040 stores therein, in association with each other, a movement pattern ID 1042 and an appearance probability 1044 of a movement pattern identified by the movement pattern ID 1042. The movement pattern ID 1042 may be one example of movement pattern identification information.

The data table 1060 stores therein, in association with each other, an attribute pattern ID 1062 and a judgment condition 1064 for judging whether or not an attribute of a user of the communication terminal 810 corresponds to an attribute pattern identified the attribute pattern ID 1062. The attribute pattern ID 1062 may be one example of attribute pattern identification information.

Examples of the judgment condition 1064 include a condition about at least one of one or more operation patterns, a condition about at least one of one or more movement patterns, a condition formed by combining at least one of one or more operation patterns and at least one of one or more movement patterns, or the like. For example, there are a condition that the appearance probability of an operation pattern OP-001 is 5% or lower, a condition that the appearance probability of the operation pattern OP-001 is 5% or lower or the appearance probability of an operation pattern OP-002 is 10% or higher, a condition that the appearance probability of the operation pattern OP-001 is 5% or lower and the appearance probability of a movement pattern MP-001 is 10% or higher, or the like.

The data table 1080 stores therein, in association with each other, an attribute pattern ID 1062 and a judgment result 1084 indicating whether or not an attribute of a user of the communication terminal 810 corresponds to an attribute pattern identified by the attribute pattern ID 1062. The data table 1080 may store therein an attribute pattern ID 1062 of an attribute pattern to which an attribute of a user of the communication terminal 810 is judged to correspond to.

In the present embodiment, a case where the data table 1020 and the data table 1040 store therein the appearance probability of each pattern was explained. The data table 1020 and the data table 1040 are not limited to the present embodiment. In another embodiment, the data table 1020 and the data table 1040 may store therein the appearance frequency of each pattern.

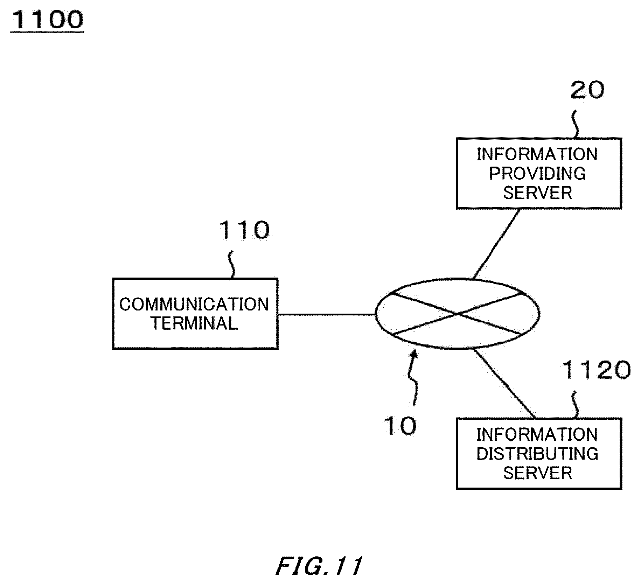

Fig. 11 schematically shows one example of an information distributing system 1100 together with the information providing server 20. In the present embodiment, the information distributing system 1100 comprises the communication terminal 110 and the information distributing server 1120. The information distributing system 1100 and the information distributing server 1120 may be one example of an information processing system.

The information distributing server 1120 acquires one or more pieces of log information from each of the one or more communication terminals 110. The information distributing server 1120 may store the acquired log information in the memory apparatus. The information distributing server 1120 analyzes the log information to generate presence probability information about the probability that a communication terminal present in a first area is present in a second area after each of one or more predetermined periods of time has elapsed. The first area and the second area may be one of one or more areas having predetermined geographical ranges. The first area and the second area may be the same area, or may be different areas.

The information distributing server 1120 distributes advertisement information to the communication terminal 110. The information distributing server 1120 may select, based on presence probability information, advertisement information to be transmitted to the communication terminal 110. The information distributing server 1120 may select, based on presence probability information, at least either of a communication terminal to which advertisement information is distributed and an area in which the advertisement information is distributed.

The information distributing server 1120 may transmit the selected advertisement information to the communication terminal 110. The information distributing server 1120 may transmit, to the information providing server 20, the selected advertisement information or information identifying the advertisement information. The information distributing server 1120 may add the selected advertisement information to HTML data to be transmitted from the information providing server 20 to the communication terminal 110.

The advertisement information is not limited particularly as long as it is information to be notified to a user of the communication terminal 110. The advertisement information may be information about commodities or services of a distributor. The information about commodities or services may be discount information about the commodities or services (referred to as coupon information, in some cases), event notification information or the like. The advertisement information may be information about a particular geographical area.

As another example of information about commodities or services, the advertisement information may be operation suspension information, delay information, congestion information or the like when the distributor is a public transportation operator. Also, when the distributor is a company or an administrative office that provides weather forecast services, the advertisement information may be an alarm or a warning about local downpour, lightning, gust or the like. The advertisement information may be information about disaster.

Respective units of the information distributing server 1120 may be realized by hardware, may be realized by software, or may be realized by a combination of hardware and software. Also, execution of programs may allow a computer to function as a part of the information collecting server 120. The programs may be memorized in a computer-readable medium or may be memorized in a memory apparatus connected to a network.

The programs that are installed on the computer and cause the computer to function as a part of the information distributing server 1120 according to the present embodiment comprise modules defining operations of respective units of the information distributing server 1120. These program or modules act on a CPU or the like to cause the computer to respectively function as respective units of the information distributing server 1120 or cause the computer to execute an information processing method in the information distributing server 1120.

Information processing described in these programs is read into the computer to function as specific means in which software and various types of hardware resources of the information distributing server 1120 cooperate with each other. Then, by realizing, with these specific means, an arithmetic operation or processing on information according to the purpose of use of a computer in the present embodiment, the information distributing server 1120 according to the purpose of use can be constructed.

In the present embodiment, a case where the information distributing system 1100 comprises the communication terminal 110, and the information distributing server 1120 transmits and receives information to and from the communication terminal 110 was explained. However, the information distributing system 1100 and the information distributing server 1120 are not limited to the present embodiment. In another embodiment, the information distributing system 1100 may comprise at least either of the communication terminal 610 and the communication terminal 810, in place of the communication terminal 110 or together with the communication terminal 110. The information distributing server 1120 may transmit and receive information to and from at least either of the communication terminal 610 and the communication terminal 810, in place of the communication terminal 110 or together with the communication terminal 110.

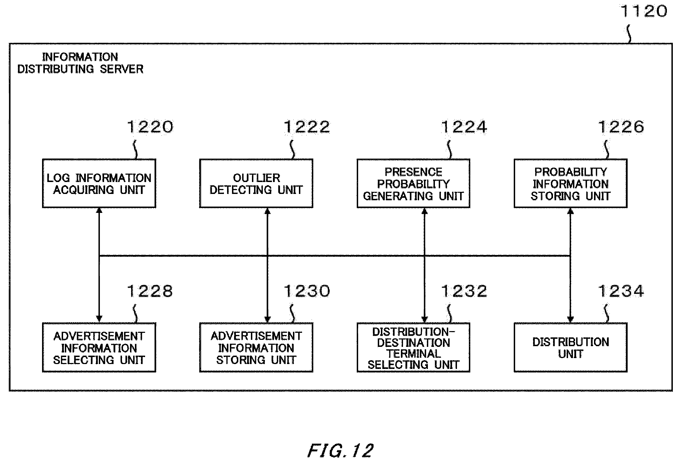

Fig. 12 schematically shows one example of the information distributing server 1120. In the present embodiment, the information distributing server 1120 comprises a log information acquiring unit 1220, an outlier detecting unit 1222, a presence probability generating unit 1224, a probability information storing unit 1226, an advertisement information selecting unit 1228, an advertisement information storing unit 1230, a distribution-destination terminal selecting unit 1232 and a distribution unit 1234.

The log information acquiring unit 1220 acquires one or more pieces of log information from the one or more communication terminals 110. The log information acquiring unit 1220 transmits the acquired log information to the outlier detecting unit 1222. The log information acquiring unit 1220 may be one example of a movement history acquiring unit. In the present embodiment, a case where log information is utilized as a movement history was explained. However, the movement history may be any information in which terminal identification information identifying each of one or more communication terminals, terminal positional information indicating the positions where communication terminals are present, and acquisition clock time information indicating clock times at which terminal positional information was acquired are associated with each other, and the movement history is not limited to log information.

The outlier detecting unit 1222 receives one or more pieces of log information from the log information acquiring unit 1220. The outlier detecting unit 1222 detects, as an outlier, log information indicating a value that deviates from values indicated by other pieces of log information out of the received log information. Thereby, the precision of presence probability can be improved. After adding, to log information whose value is detected as an outlier, information indicating that the value is an outlier, the outlier detecting unit 1222 may transmit all the pieces of log information received from the log information acquiring unit 1220 to the presence probability generating unit 1224. The outlier detecting unit 1222 may transmit, to the presence probability generating unit 1224, pieces of the log information received from the log information acquiring unit 1220, excluding a piece of log information whose value is detected as an outlier.

The outlier detecting unit 1222 may detect an outlier based on the mean value and standard deviation of subjects on which detection about outliers is performed. For example, a value is detected as an outlier when it is not included in a range that covers the standard deviation times a certain value (for example, two-fold or three-fold) centering on the mean value. The outlier detecting unit 1222 may detect an outlier based on comparison with a predetermined value.

According to one embodiment, when at least a part of one or more pieces of log information is associated with positional information, communication environment information of a communication terminal, and information about the GPS precision of GPS information acquired by a communication terminal at a time point at which the positional information was acquired, the outlier detecting unit 1222 detects a particular piece of log information as an outlier in the following procedure. The outlier detecting unit 1222 first determines whether or not the GPS precision of each piece of log information including GPS information is higher than a predetermined value. When the GPS precision is higher than the predetermined value, a piece of log information including information about the GPS precision is detected as an outlier.

According to the present embodiment, a piece of information whose positional information has precision worse than a predetermined value can be excluded. As a result, the precision of statistical information generated by the presence probability generating unit 1224 can be improved. Also, according to the present embodiment, log information can be separated into outdoor or window side log information and indoor log information.

The GPS precision is expressed by using, for example, CEP (Circular Error Probability). CEP is expressed as a radius of a particular circle in which a GPS receiver is likely to be at the probability of 50%. When a GPS receiver is at a location, whether an outdoor or indoor location, where it is easy for the GPS receiver to receive GPS signals (for example, window side), CEP becomes a small value. On the other hand, when the GPS receiver is at a location where it is difficult for the GPS receiver to receive GPS signals, such as an indoor location, CEP becomes a large value.

According to another embodiment, the outlier detecting unit 1222 may detect an outlier based on the moving speed of a communication terminal. According to the present embodiment, even when positional information included in log information shows, due to some error, a position largely different from a position at which communication environment information was actually acquired, such information can be excluded. As a result, the precision of presence probability information can be improved.

According to a still another embodiment, the outlier detecting unit 1222 may detect a piece of log information as an outlier when the position indicated by positional information included in the piece of log information is outside a predetermined geographical range. For example, when a position outside Japan is indicated by the positional information included in a piece of log information despite the fact that the presence probability generating unit 1224 is generating presence probability information of Japan, the outlier detecting unit 1222 detects the piece of log information as an outlier.

The presence probability generating unit 1224 receives one or more pieces of log information from the outlier detecting unit 1222. The presence probability generating unit 1224 generates one or more pieces of presence probability information based on the received log information. In one embodiment, the presence probability generating unit 1224 calculates the presence probabilities for all the combinations of two areas selected from among one or more areas. The presence probability generating unit 1224 generates the presence probability information by associating area identification information of a first area, area identification information of a second area, and the presence probability about the combination of the first area and the second area. The area identification information may be information identifying each of the one or more areas.

In another embodiment, when a particular area is assumed to be a first area, the presence probability generating unit 1224 may set, as a second area, one or more areas present within a predetermined distance or one or more areas which are reachable within a predetermined length of time by utilizing a public transportation such as trains or airplanes, and calculate their respective presence probabilities. The presence probability generating unit 1224 generates the presence probability information by associating area identification information of a first area, area identification information of a second area, and the presence probability about the combination of the first area and the second area. Thereby, the processing speed at the presence probability generating unit 1224 improves. Also, the processing speeds at the advertisement information selecting unit 1228 and the distribution-destination terminal selecting unit 1232 improve.

In another embodiment, after calculating the presence probability, the presence probability generating unit 1224 may generate presence probability information by associating area identification information of a particular area with area identification information of one or more areas whose presence probabilities are higher than a predetermined value. Thereby, the processing speed at the presence probability generating unit 1224 improves. Also, the processing speeds at the advertisement information selecting unit 1228 and the distribution-destination terminal selecting unit 1232 improve.

In another embodiment, after calculating the presence probability, the presence probability generating unit 1224 may derive, for particular areas, a predetermined number of areas in the descending order of values of the presence probabilities out of areas whose presence probabilities have been calculated. The presence probability generating unit 1224 may generate the presence probability information by associating area identification information of the particular area with the area identification information of a derived area. Thereby, the processing speed at the presence probability generating unit 1224 improves. Also, the processing speeds at the advertisement information selecting unit 1228 and the distribution-destination terminal selecting unit 1232 improve.

The presence probability generating unit 1224 may generate each of one or more pieces of presence probability information for each of one or more categories about time. When information about a climate at the clock time at which positional information was acquired is included in log information, or when log information can be associated with information about a climate at the clock time at which positional information was acquired, the presence probability generating unit 1224 may generate each of one or more pieces of presence probability information for each of one or more categories about climate. When information about an attribute of a user of a communication terminal is included in log information, or when log information can be associated with information about an attribute of a user of a communication terminal, the presence probability generating unit 1224 may generate each of one or more pieces of presence probability information for each of one or more categories about attribute of a user of a communication terminal.

The presence probability generating unit 1224 stores the generated presence probability information in the probability information storing unit 1226. The probability information storing unit 1226 derives the presence probability according to a request from the advertisement information selecting unit 1228 and the distribution-destination terminal selecting unit 1232.

The advertisement information selecting unit 1228 selects advertisement information that should be distributed to at least one communication terminal present in a first area based on at least one of one or more pieces of presence probability information. The advertisement information selecting unit 1228 may select advertisement information by referring to the probability information storing unit 1226.

For example, when selecting advertisement information that should be distributed to a communication terminal 110 present at Tokyo Station, the advertisement information selecting unit 1228 requests the probability information storing unit 1226 to derive an area where the communication terminal 110 present at Tokyo Station will likely be present after one hour at a probability higher than a particular threshold. In this case, as a first area, the advertisement information selecting unit 1228 may inform the probability information storing unit 1226 of an area identification number of an area including Tokyo Station. Also, the probability information storing unit 1226 may be informed of the fact that the presence probability of a time after one hour should be derived and of a threshold of the presence probability.

When the presence probability information is generated in association with at least one of a category about time, a category about climate and a category about attribute of a user of a communication terminal, the advertisement information selecting unit 1228 may select advertisement information based on at least one of one or more pieces of presence probability information and at least one of a time at which advertisement information is distributed, a climate of a time at which the advertisement information is distributed, and an attribute of a user of a communication terminal to which the advertisement information is distributed. Thereby, more proper advertisement information can be distributed to a user of a communication terminal.

The advertisement information storing unit 1230 stores therein advertisement information that should be distributed. The advertisement information storing unit 1230 may store therein advertisement information that should be distributed in association with a target attribute of the advertisement information.

The distribution-destination terminal selecting unit 1232 selects a communication terminal to which particular advertisement information should be distributed from among one or more communication terminals based on at least one of one or more pieces of presence probability information. The distribution-destination terminal selecting unit 1232 may refer to the probability information storing unit 1226 to select a communication terminal to which particular advertisement information should be distributed.

For example, when advertisement information about a restaurant near Tokyo Station is to be distributed, the distribution-destination terminal selecting unit 1232 requests the probability information storing unit 1226 to derive an area where a communication terminal whose probability of presence at Tokyo Station after one hour is higher than a particular threshold is currently present. In this case, as a second area, the distribution-destination terminal selecting unit 1232 may inform the probability information storing unit 1226 of an area identification number of an area including Tokyo Station. Also, the probability information storing unit 1226 may be informed of the fact that the presence probability of a time after one hour should be derived and of a threshold of the presence probability.

When the presence probability information is generated in association with at least one of a category about time, a category about climate and a category about attribute of a user of a communication terminal, the advertisement information selecting unit 1228 may select a communication terminal, to which particular advertisement information should be distributed, based on at least one of one or more pieces of presence probability information and at least one of a time at which advertisement information is distributed, a climate of a time at which the advertisement information is distributed, and an attribute of a user of a communication terminal to which the advertisement information is distributed. More proper advertisement information can be distributed to a user of a communication terminal.

The distribution unit 1234 distributes, to the communication terminal 110, advertisement information selected by at least either of the advertisement information selecting unit 1228 and the distribution-destination terminal selecting unit 1232. The distribution unit 1234 may distribute advertisement information to at least one communication terminal present in a first area based on at least one of one or more pieces of presence probability information. The distribution unit 1234 may transmit, to the information providing server 20, information identifying advertisement information selected by at least either of the advertisement information selecting unit 1228 and the distribution-destination terminal selecting unit 1232.

In the present embodiment, a case where the information distributing server 1120 comprises the outlier detecting unit 1222 was explained. However, the information distributing server 1120 is not limited to the present embodiment. For example, the information distributing server 1120 may not comprise the outlier detecting unit 1222, and the presence probability generating unit 1224 may generate presence probability information based on log information acquired by the log information acquiring unit 1220. In another embodiment, the information distributing server 1120 may analyze one or more pieces of log information acquired from a communication terminal, and utilize the one or more pieces of log information to complement the position of the communication terminal at a particular clock time.
The information distributing server 1120 may utilize the complemented data to execute the above-mentioned process.

The information distributing server 1120 may analyze one or more pieces of log information acquired from one or more communication terminals to acquire map information. The map information may be information about traffic networks, the positions of facilities or the like. When the number of pieces of log information about a particular position in a particular period of time is larger than a particular value, the information distributing server 1120 may acquire positional information of the position as map information. The positional information may include information about height. The information distributing server 1120 may compare the above-mentioned map information obtained by analyzing the log information with existing map information to acquire map information not included in the existing map information. Thereby, information about a geographical point whose map information should be updated can be acquired readily.

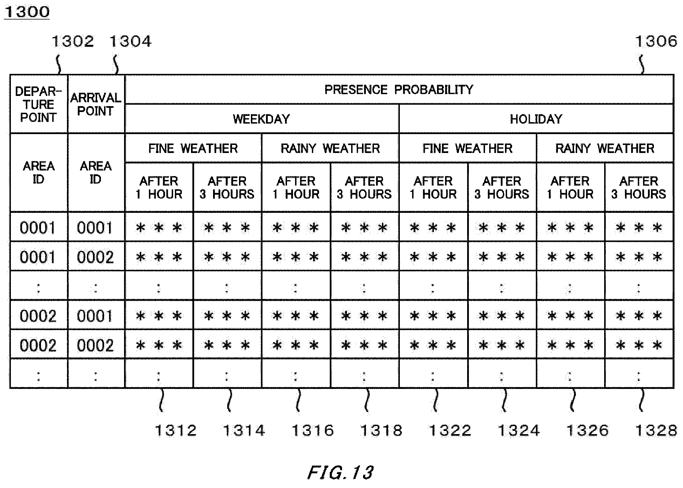

Fig. 13 schematically shows one example of a presence probability information data table 1300. The data table 1300 may be one example of presence probability information generated by being associated with a category about time and a category about climate.

The data table 1300 stores therein, in association with each other: an area ID 1302, an area ID 1304; and a presence probability 1306. The area ID 1302 may be one example of area identification information of a first area. The area ID 1304 may be one example of area identification information of a second area. In Fig. 13, the presence probability 1312 indicates the presence probability of a time after one hour on a weekday in fine weather in a case where the area ID 1302 is set as a first area and the area ID 1304 is set as a second area.

Similarly, the presence probability 1314 indicates the presence probability of a time after three hours on a weekday in fine weather. The presence probability 1316 indicates the presence probability of a time after one hour on a weekday in rainy weather. The presence probability 1318 indicates the presence probability of a time after three hours on a weekday in rainy weather. The presence probability 1322 indicates the presence probability of a time after one hour on a holiday in fine weather. The presence probability 1324 indicates the presence probability of a time after three hours on a holiday in fine weather. The presence probability 1326 indicates the presence probability of a time after one hour on a holiday in rainy weather. The presence probability 1328 indicates the presence probability of a time after three hours on a holiday in rainy weather.

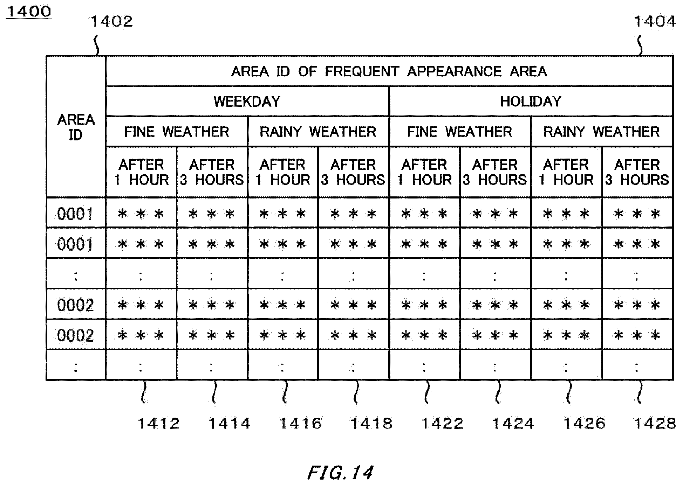

Fig. 14 schematically shows one example of a presence probability information data table 1400. The data table 1400 may be one example of presence probability information generated by being associated with a category about time and a category about climate. The data table 1400 may be one example of presence probability information generated by associating area identification information of a particular area with area identification information of one or more areas whose presence probabilities are higher than a predetermined value.

The data table 1400 stores therein an area ID 1402 and an area ID 1404 of a frequent appearance area in association with each other. The area ID 1402 may be one example of area identification information of a first area. The area ID 1404 may be one example of area identification information of an area whose presence probability is higher than a predetermined value when the area ID 1402 is set as a first area and the area ID 1404 is set as a second area.

The area ID 1412 indicates an area ID of an area whose presence probability of a time after one hour on a weekday in fine weather is higher than a predetermined value. The area ID 1414, the area ID 1416, the area ID 1418, the area ID 1422, the area ID 1424, the area ID 1426 and the area ID 1428 are similarly area IDs satisfying conditions shown in Fig. 14.

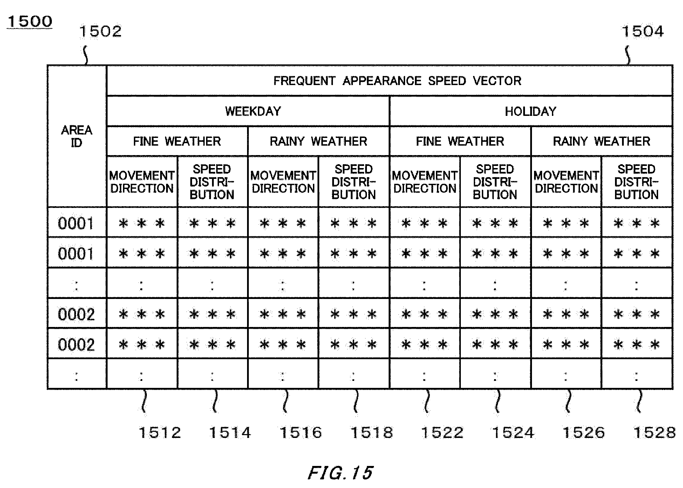

Fig. 15 schematically shows one example of a presence probability information data table 1500. The data table 1500 may be one example of presence probability information generated by being associated with a category about time and a category about climate. The data table 1500 may be one example of presence probability information generated by associating area identification information of a particular area with area identification information of one or more areas whose presence probabilities are higher than a predetermined value.

The data table 1500 stores therein an area ID 1502 and a frequent appearance speed vector 1504 in association with each other. The speed vector may be a combination of a movement direction and a moving speed at a particular geographical point. The movement direction may be indicated by a category including a direction of a predetermined range. For example, when a category of direction is "North," the direction from the northwest through the north to the northeast may be indicated.

The moving speed may be indicated by a category including a speed of a predetermined range. For example, the moving speed may be categorized into categories like: slower than 5 km/hr; 5 km/hr or faster and slower than 20 km/hr; 20 km/hr or faster and slower than 60km/hr; and 60km/hr or faster. Thereby, an area where a communication terminal is highly likely to be present after any length of time has elapsed can be derived.

The moving speed may be indicated by a probability distribution function of moving speeds. The moving speed may be indicated by the mean value and the standard deviation of moving speeds. Thereby, advertisement information or the like can be selected based on any presence probability after any length of time has elapsed.

The movement direction 1512 indicates a movement direction whose presence probability is higher than a predetermined value on a weekday in fine weather. The speed distribution 1514 indicates a speed category whose presence probability is higher than a predetermined value for example on a weekday in fine weather. The same applies to the movement direction 1516, the speed distribution 1518, the movement direction 1522, the speed distribution 1524, the movement direction 1526 and the speed distribution 1528.

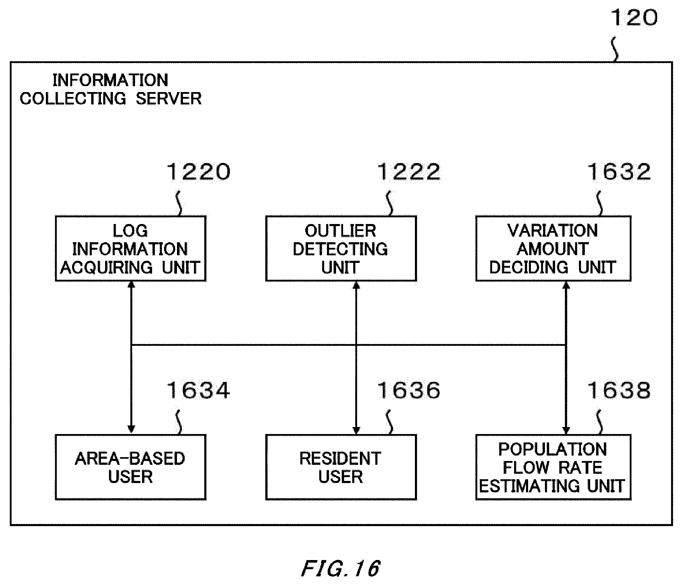

Fig. 16 schematically shows one example of the information collecting server 120. Fig. 16 schematically shows another example of the information collecting server 120 explained in relation to Fig. 1.

With reference to Fig. 1, a case where the information collecting server 120 uses log information received from each of the one or more communication terminals 110 to analyze the communication status was explained. The information collecting server 120 explained in relation to Fig. 1 generates information about the communication status at at least a part of one or more positions, for example. The information about the communication status may be statistical information about the position of a communication environment. The statistical information may be information about temporal or geographical tendency of at least one of pieces of information about the communication environment. The statistical information may be temporal changes of the possibility or impossibility of communication or the communication quality at the same position or in the same geographical range. The statistical information may be total results of the possibility or impossibility of communication or the communication quality at the same position or in the same area.

In contrast, with reference to Fig. 16, the information collecting server 120 is explained with an exemplary case where the information collecting server 120 estimates the population flow rate by using log information received from each of one or more communication terminals.

In Fig. 16, the information collecting server 120 may have a similar configuration to that of the information collecting server 120 explained in relation to Fig. 1, in terms of components other than components peculiar to estimation of a population flow rate. For example, in Fig. 16 also, the information collecting server 120 may be realized by activating software or a program defining an operation of each unit of each of the information providing server 20 and the information collecting server 120 in a generally configured information processing apparatus. Explanation of similar configurations to those of the information collecting server 120 explained in relation to Fig. 1 are omitted. Also, the communication terminal 110, the communication terminal 610 and the communication terminal 810 may be one example of one or more communication terminals. The information collecting server 120 may be one example of a population flow rate estimation apparatus.

In the present embodiment, the information collecting server 120 comprises the log information acquiring unit 1220, the outlier detecting unit 1222, a variation amount deciding unit 1632, an area-based user count deciding unit 1634, a resident user count deciding unit 1636 and a population flow rate estimating unit 1638. The log information acquiring unit 1220 and the outlier detecting unit 1222 may have similar configurations to those of the log information acquiring unit 1220 and the outlier detecting unit 1222 of the information distributing server 1120.

The variation amount deciding unit 1632 receives log information from the outlier detecting unit 1222. Based on the received log information, the variation amount deciding unit 1632 totals up the number of communication terminals present inside at least one area from among one or more area having predetermined geographical ranges in a particular period of time. Based on the total result, the variation amount deciding unit 1632 decides a variation amount of the number of communication terminals in the predetermined period of time.

The area-based user count deciding unit 1634 decides the number of area-based users indicating the number of communication terminals, from among one or more communication terminals, of users whose activity bases are in each area of the one or more areas having predetermined geographical ranges. Based on a movement history of a communication terminal, the area-based user count deciding unit 1634 may decide the activity base of a user of the communication terminal.

The resident user count deciding unit 1636 decides the number of resident users indicating the number of communication terminals, from among one or more communication terminals, of users whose residence is in each area of one or more areas having predetermined geographical ranges. Based on a movement history of a communication terminal, the resident user count deciding unit 1636 may decide residence of a user of the communication terminal.

The population flow rate estimating unit 1638 estimates a population flow rate based on a variation amount of the number of communication terminals in a predetermined period of time. The population flow rate estimating unit 1638 may calculate a conversion factor between a variation amount of the number of communication terminals decided by the variation amount deciding unit 1632, and a demographic statistics value. The population flow rate estimating unit 1638 may estimate a population flow rate by multiplying a variation amount of the number of communication terminals decided by the variation amount deciding unit 1632 with the conversion factor. Examples of demographic statistics values include demographic statistics values published by Statistic Bureau, Ministry of Internal Affairs and Communications.

According to the present embodiment, a population flow rate is estimated based on one or more pieces of log information from one or more communication terminals. For this reason, the actual state of the population flow rate can be more accurately grasped.

The population flow rate estimating unit 1638 may analyze one or more pieces of log information acquired from one or more communication terminals to acquire map information. The map information may be information about traffic networks, the positions of facilities or the like. When the number of pieces of log information, appearance frequency, or appearance probability about a particular position in a particular period of time is larger or higher than a particular value, the population flow rate estimating unit 1638 may acquire positional information of the position as map information. The population flow rate estimating unit 1638 may compare the above-mentioned map information obtained by analyzing the log information with existing map information to acquire map information not included in the existing map information. Thereby, information about a geographical point whose existing map information should be updated can be acquired readily. The population flow rate estimating unit 1638 may be one example of a map information generating unit.

Similar to the case of the information distributing server 1120, the information collecting server 120 may analyze one or more pieces of log information acquired from a communication terminal, and utilize the one or more pieces of log information to complement the position of the communication terminal at a particular clock time. The information distributing server 1120 may utilize the complemented data to execute the above-mentioned process.

While the embodiments of the present invention have been described, the technical scope of the invention is not limited to the above described embodiments. It is apparent to persons skilled in the art that various alterations and improvements can be added to the above-described embodiments. Also, matters explained about particular embodiment can be applied to other embodiments, as long as such application does not generate technical contradictions. It is also apparent from the scope of the claims that the embodiments added with such alterations or improvements can be included in the technical scope of the invention.

For example, in one embodiment, an information processing system comprises the information distributing server 1120, and the information collecting server 120 explained in relation to Fig. 16. In another embodiment, the information distributing server 1120 may further comprise a configuration peculiar to the information collecting server 120 explained in relation to Fig. 16. For example, the information distributing server 1120 may further comprise the variation amount deciding unit 1632.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Symbols]

10: communication network; 20: information providing server; 100: communication status analyzing system; 110: communication terminal; 120: information collecting server; 212: input unit; 214: process executing unit; 216: environmental information acquiring unit; 218: positional information acquiring unit; 222: output unit; 224: identification information acquiring unit; 226: log information generating unit; 228: communication control unit; 300: data table; 310: terminal ID; 320: date and time; 330: positional information; 340: GPS precision; 350: communication environment information; 352: possibility or impossibility of communication; 354: throughput; 356: latency; 610: communication terminal; 632: program managing unit; 634: shift determining unit; 636: timing deciding unit; 810: communication terminal; 832: attribute analyzing unit; 834: analysis information storing unit; 836: output control unit; 912: operation pattern comparing unit; 914: movement pattern comparing unit; 916: attribute deciding unit; 918: pattern storing unit; 1020: data table; 1022: operation pattern ID; 1024: appearance probability; 1040: data table; 1042: movement pattern ID; 1044: appearance probability; 1060: data table; 1062: attribute pattern ID; 1064: judgment condition; 1080: data table; 1084: judgment result; 1100: information distributing system; 1120: information distributing server; 1220: log information acquiring unit; 1222: outlier detecting unit; 1224: presence probability generating unit; 1226: probability information storing unit; 1228: advertisement information selecting unit; 1230: advertisement information storing unit; 1232: distribution-destination terminal selecting unit; 1234: distribution unit; 1300: data table; 1302: area ID; 1304: area ID; 1306: presence probability; 1312: presence probability; 1314: presence probability; 1316: presence probability; 1318: presence probability; 1322: presence probability; 1324: presence probability; 1326: presence probability; 1328: presence probability; 1400: data table; 1402: area ID; 1404: area ID; 1412: area ID; 1414: area ID; 1416: area ID; 1418: area ID; 1422: area ID; 1424: area ID; 1426: area ID; 1428: area ID; 1500: data table; 1502: area ID; 1504: frequent appearance speed vector; 1512: movement direction; 1514: speed distribution; 1516: movement direction; 1518: speed distribution; 1522: movement direction; 1524: speed distribution; 1526: movement direction; 1528: speed distribution; 1632: variation amount deciding unit; 1634: area-based user count deciding unit; 1636: resident user count deciding unit; 1638: population flow rate estimating unit

## Claims

1. An information processing system comprising:
a movement history acquiring unit that acquires one or more pieces of movement history information in which terminal identification information identifying each of one or more communication terminals, terminal positional information indicating a position of a communication terminal identified by the terminal identification information, and acquisition clock time information indicating a clock time at which the terminal positional information has been acquired are associated with each other; and
a presence probability generating unit that generates, based on the one or more pieces of movement history information, each of one or more pieces of presence probability information about a probability that a communication terminal present in a first area from among one or more areas having predetermined geographical ranges is present in a second area from among the one or more areas after each of one or more predetermined periods of time has elapsed.

2. The information processing system according to Claim 1, wherein the presence probability generating unit generates the one or more pieces of presence probability information about at least one of one or more categories about time.

3. The information processing system according to Claim 1 or 2, wherein
each of the one or more movement histories includes information about an external environment of a communication terminal at a clock time at which the terminal positional information has been acquired, and
the presence probability generating unit generates the one or more pieces of presence probability information about at least one of one or more categories about the external environment.

4. The information processing system according to any one of Claims 1 to 3, wherein
each of the one or more movement histories includes information about an attribute of a user of a communication terminal identified by the terminal identification information, and
the presence probability generating unit generates each of the one or more pieces of presence probability information for each of one or more categories about attribute of a user of the one or more communication terminals.

5. The information processing system according to any one of Claims 1 to 4, further comprising a distribution unit that distributes, based on at least one of the one or more pieces of presence probability information, advertisement information to at least one communication terminal present in the first area.

6. The information processing system according to any one of Claims 1 to 5, further comprising an advertisement information selecting unit that selects, based on at least one of the one or more pieces of presence probability information, advertisement information that should be distributed to at least one communication terminal present in the first area.

7. The information processing system according to Claim 6, wherein the advertisement information selecting unit selects the advertisement information based on at least one of the one or more pieces of presence probability information and on at least one of a time at which the advertisement information is distributed, a climate at a time at which the advertisement information is distributed, and an attribute of a user of a communication terminal to which the advertisement information is distributed.

8. The information processing system according to any one of Claims 1 to 7, further comprising a distribution-destination terminal selecting unit that selects, based on at least one of the one or more pieces of presence probability information, at least either of: a communication terminal, from among the one or more communication terminals, to which a particular piece of advertisement information should be distributed; and an area to which the particular piece of advertisement information should be distributed.

9. The information processing system according to Claim 8, wherein the distribution-destination terminal selecting unit selects at least either of: a communication terminal to which the particular piece of advertisement information should be distributed; and an area to which the particular piece of advertisement information should be distributed, based on at least one of the one or more pieces of presence probability information and on at least one of a time at which the advertisement information is distributed, a climate at a time at which the advertisement information is distributed, and an attribute of a user of a communication terminal to which the advertisement information is distributed.

10. The information processing system according to any one of Claims 1 to 9, further comprising an outlier detecting unit that detects an outlier out of the one or more pieces of movement history information, wherein
the presence probability generating unit decides each of the one or more pieces of presence probability information, excluding movement history information detected as the outlier by the outlier detecting unit from among the one or more pieces of movement history information.

11. The information processing system according to any one of Claims 1 to 10, further comprising a variation amount deciding unit that decides, based on the one or more pieces of movement history information, a variation amount, in a predetermined period of time, of the number of communication terminals, from among the one or more communication terminals, that are present in each area of the one or more areas.

12. An information processing system comprising:
a movement history acquiring unit that acquires one or more pieces of movement history information in which terminal identification information identifying each of one or more communication terminals, terminal positional information indicating a position of a communication terminal identified by the terminal identification information, and acquisition clock time information indicating a clock time at which the terminal positional information has been acquired are associated with each other; and
a map information generating unit that analyzes the one or more pieces of movement history information to generate map information.

13. A population flow rate estimation apparatus comprising:
a movement history acquiring unit that acquires one or more pieces of movement history information in which terminal identification information identifying each of one or more communication terminals, terminal positional information indicating a position where the communication terminal has been present, and acquisition clock time information indicating a clock time at which the terminal positional information has been acquired are associated with each other;
an outlier detecting unit that detects an outlier out of the one or more pieces of movement history information; and
a variation amount deciding unit that decides, based on the one or more pieces of movement history information, a variation amount, in a predetermined period of time, of the number of communication terminals, from among the one or more communication terminals, that are present in at least one area from among one or more areas having predetermined geographical ranges, wherein
the variation amount deciding unit decides the variation amount in a predetermined period of time, excluding movement history information detected as the outlier by the outlier detecting unit from among the one or more pieces of movement history information.

14. The population flow rate estimation apparatus according to Claim 13, further comprising an area-based user count deciding unit that decides the number of area-based users indicating the number of communication terminals, from among the one or more communication terminals, of users having activity bases in each area of one or more areas having predetermined geographical ranges.

15. The population flow rate estimation apparatus according to Claim 13 or 14, further comprising a population flow rate estimating unit that estimates a population flow rate based on the variation amount in a predetermined period of time.

16. A program that causes a computer to function as the information processing system according to any one of Claims 1 to 12.

17. A program that causes a computer to function as the population flow rate estimation apparatus according to any one of Claims 13 to 15.

18. An information processing method comprising:
acquiring one or more pieces of movement history information in which terminal identification information identifying each of one or more communication terminals, terminal positional information indicating a position where the communication terminal is present, and acquisition clock time information indicating a clock time at which the terminal positional information has been acquired are associated with each other; and
generating, based on the one or more pieces of movement history information, each of one or more pieces of presence probability information about a probability that a communication terminal present in a first area from among one or more areas having predetermined geographical ranges is present in a second area from among the one or more areas after each of one or more predetermined periods of time has elapsed.

19. A method of estimating a population flow rate comprising:
acquiring one or more pieces of movement history information in which terminal identification information identifying each of one or more communication terminals, terminal positional information indicating a position where the communication terminal has been present, and acquisition clock time information indicating a clock time at which the terminal positional information has been acquired are associated with each other;
detecting an outlier out of the one or more pieces of movement history information; and
deciding, based on the one or more pieces of movement history information, a variation amount, in a predetermined period of time, of the number of communication terminals, from among the one or more communication terminals, that are present in at least one area from among one or more areas having predetermined geographical ranges, wherein
the deciding has deciding the variation amount in a predetermined period of time, excluding movement history information detected as the outlier by the detecting from among the one or more pieces of movement history information.
